# EUROPEAN PATENT APPLICATION

(11) **EP 4 575 799 A1**
(43) Date of publication of application: **25.06.2025**
(21) Application number: 24220178.8
(22) Date of filing: 16.12.2024
(51) Int. Cl.: G06F 11/34, G06F 3/01, G06F 3/04842

(54) **METHOD FOR EVALUATING HUMAN-MACHINE INTERACTION OF VEHICLE, SYSTEM, EDGE COMPUTING DEVICE, AND MEDIUM**

(30) Priority: 22.12.2023 CN 202311790032; 29.12.2023 CN 202311869332
(71) Applicant: Kingfar International Inc., Beijing 100080 (CN)
(72) Inventor: ZHAO, Qichao, Beijing, 100080 (CN); YANG, Ran, Beijing, 100080 (CN)
(74) Representative: Range, Christopher William

(57) **Abstract**

Provide are a method for evaluating a human-machine interaction of a vehicle, a system, an edge computing device, and a medium. The method includes: acquiring, in a target driving test scenario, human-factor interaction data and external data, in which the human-factor interaction data is generated based on an interaction between a tester and a human-machine interaction system of the vehicle, and the external data is associated with driving of the vehicle; and evaluating an interaction element in the human-machine interaction system based on the human-factor interaction data and the external data to obtain evaluation data for the interaction element.

## Description

### CROSS-REFERENCE TO RELATED APPLICATION

This application is based on and claims a priority to Chinese Patent Application No. 202311790032.1 filed on December 22, 2023, and a priority to Chinese Patent Application No. 202311869332.9 filed on December 29, 2023.

### FIELD

The present disclosure relates to the field of traffic, human-factor intelligence, human-machine interaction, and the like, and more particularly, to a method for evaluating a human-machine interaction of a vehicle, a system, an edge computing device, and a medium.

### BACKGROUND

The technology of a human-machine interaction system of a vehicle mainly focuses on core hardware development and software algorithm development of a Head Up Display (HUD) and a Human Machine Interface (HMI), but the HMI/HUD is not assessed from the perspective of comprehensive evaluation. In addition, an existing design assessment system is applicable to a single scenario, mainly focusing on subjective assessment, lacking multi-dimensional comprehensive assessment, and neglecting the construction of a HUD/HMI comprehensive evaluation system.

### SUMMARY

The present disclosure provides a method for evaluating a human-machine interaction of a vehicle, a system, an edge computing device, and a medium, capable of comprehensively evaluating a human-machine interaction system of the vehicle.

In a first aspect, the present disclosure provides a method for evaluating a human-machine interaction of a vehicle. The method includes: acquiring, in a target driving test scenario, human-factor interaction data and external data, the human-factor interaction data being generated based on an interaction between a tester and a human-machine interaction system of the vehicle, and the external data being associated with driving of the vehicle; and evaluating an interaction element in the human-machine interaction system based on the human-factor interaction data and the external data to obtain evaluation data for the interaction element.

In some embodiments, the evaluating the interaction element in the human-machine interaction system based on the human-factor interaction data and the external data includes: processing the human-factor interaction data and the external data to obtain processed data and a preliminary evaluation result; and processing the processed data and the preliminary evaluation result based on evaluation rule data to obtain the evaluation data for the interaction element.

In some embodiments, the processing the human-factor interaction data and the external data to obtain the processed data and the preliminary evaluation result includes: preprocessing the human-factor interaction data and the external data to obtain a preprocessing result as the processed data, the preprocessing result including at least one of labeling the human-factor interaction data and the external data, dividing data segments of the human-factor interaction data and the external data, determining information about the human-machine interaction system in which the tester is interested, and performing smoothing process on the human-factor interaction data and the external data; and obtaining the preliminary evaluation result based on the preprocessing result, the preliminary evaluation result including at least one of association information between the human-factor interaction data and the external data, and evaluation information for the interaction element.

In some embodiments, the evaluation data includes an evaluation score, and the evaluation rule data includes an evaluation index and a score corresponding to the evaluation index; and the processing the processed data and the preliminary evaluation result based on the evaluation rule data to obtain the evaluation data for the interaction element includes: processing the processed data and the preliminary evaluation result to obtain an index value corresponding to the evaluation index; and obtaining the evaluation score for the interaction element based on the index value and the score corresponding to the evaluation index.

In some embodiments, the evaluating the interaction element in the human-machine interaction system based on the human-factor interaction data and the external data includes: acquiring subjective evaluation data for the interaction element in the human-machine interaction system; and evaluating the interaction element in the human-machine interaction system based on the human-factor interaction data, the external data, and the subjective evaluation data.

In some embodiments, the method further includes assessing the evaluation rule data. The evaluation rule data includes at least one of basic evaluation data, experience evaluation data, and user-defined evaluation data.

In some embodiments, the assessing the evaluation rule data includes: assessing, in another driving test scenario different from the target driving test scenario, the interaction element in the human-machine interaction system based on the evaluation rule data to obtain an objective assessment result; obtaining, in the another driving test scenario, a subjective assessment result for the interaction element in the human-machine interaction system; and obtaining an assessment result for the evaluation rule data based on the objective assessment result and the subjective assessment result.

In some embodiments, the method further includes: selecting the target driving test scenario from a candidate driving test scenario; acquiring driving environment information of the target driving test scenario based on a data acquisition manner corresponding to the target driving test scenario; and displaying the driving environment information in the human-machine interaction system, to enable the tester to control the vehicle to drive through interacting with the human-machine interaction system based on the driving environment information.

In some embodiments, the method further includes: acquiring updated driving environment information subsequent to the tester controlling the vehicle to drive through interacting with the human-machine interaction system based on the driving environment information; and displaying the updated driving environment information in the human-machine interaction system.

In some embodiments, the candidate driving test scenario includes at least one of: a virtual driving test scenario, a data acquisition manner corresponding to the virtual driving test scenario including at least one of a manner of generating data based on a virtual software and a manner of collecting data through a virtual sensor; a virtual-real combination driving test scenario, a data acquisition manner corresponding to the virtual-real combination driving test scenario including at least one of the manner of generating data based on the virtual software, the manner of collecting data through the virtual sensor, a manner of collecting data through a real sensor, and a manner of receiving data from an external device; and a real driving test scenario, a data acquisition manner corresponding to the real driving test scenario including at least one of the manner of collecting data through the real sensor and the manner of receiving data from the external device.

In some embodiments, the method further includes: receiving editing data for the human-machine interaction system, the editing data being used to edit at least one of a display content, an interaction manner, and a display form of the interaction element; and generating the human-machine interaction system based on the editing data and displaying the human-machine interaction system, to enable the tester to interact with the human-machine interaction system.

In some embodiments, the human-machine interaction system includes at least one of a vehicle Head Up Display (HUD) system, an instrument panel, an instrument, a central control screen, a co-driver interaction device, and an entertainment screen; the human-factor interaction data includes at least one of physiological data of the tester, eye movement data of the tester, electroencephalogram data of the tester, hand operation track data of the tester, motion posture data of the tester, face data of the tester, and voice data of the tester; and the external data associated with the driving of the vehicle includes at least one of driving data of the vehicle, external traffic data, external environment data, and voice data of the human-machine interaction system.

In some embodiments, the tester includes an evaluation driver; and the method further includes: collecting a plurality of pieces of human-factor interaction data of at least one evaluation driver of the vehicle based on a corresponding evaluation content and a driver state of the at least one evaluation driver identified based on the plurality of pieces of human-factor interaction data, the driver state including a fatigue level and/or an emotional state of the evaluation driver; and obtaining experience evaluation data of a vehicle cabin based on the plurality of pieces of human-factor interaction data and the driver state, the experience evaluation data being used to assess interactivity between the vehicle cabin and the evaluation driver.

In some embodiments, the method further includes synchronizing the plurality of pieces of human interaction data collected for a same evaluation driver; the obtaining the experience evaluation data of the vehicle cabin based on the plurality of pieces of human-factor interaction data and the driver state includes obtaining the experience evaluation data of the vehicle cabin based on the plurality of pieces of synchronized human-factor interaction data and the driver state.

In some embodiments, the collecting the plurality of pieces of human-factor interaction data of the at least one evaluation driver of the vehicle based on the corresponding evaluation content and the driver state of the at least one evaluation driver identified based on the plurality of pieces of human-factor interaction data includes: executing at least one of a test project management task, a vehicle model management task, a tester management task, and a primary tester management task; executing a resource library management task; generating an evaluation process and the corresponding evaluation content based on a timeline; executing a data analysis task based on the plurality of pieces of human-factor interaction data and the driver state; and constructing an index system, obtaining corresponding weights of the plurality of pieces of human-factor interaction data and the driver state based on the index system, and performing task execution by utilizing the weights.

In some embodiments, the test project management task includes at least one of a project creation task, a personnel assignment task, a vehicle model association task, and a project progress presentation task; the vehicle model management task includes at least one of a creation task and a management task of vehicle model information; the tester management task includes at least one of a tester adding task, a tester demographic information adding task, a demographic information user-defined adding task, a tester history recording task, a tester import and export task, and a demographic information statistics task; the primary tester management task includes at least one of a primary tester adding task and a primary tester history recording task.

In some embodiments, the resource library management task includes one or more of a use case management subtask, a questionnaire scale management subtask, a behavior experiment management subtask, a journey management subtask, and a voice evaluation management subtask in a subjective evaluation task, and an evaluation tool management subtask and a state evaluation algorithm model management subtask in an objective evaluation task.

In some embodiments, the data analysis task includes at least one of a video behavior data analysis task, an eye movement data analysis task, a physiological data analysis task, a voice data analysis task, and a visual report task.

In some embodiments, the constructing the index system includes constructing the index system based on composition elements of a human-machine-environment system, the index system including at least one of a safety index, an efficiency index, and a pleasantness index; an evaluation method for the index in the index system includes subjective evaluation and/or objective evaluation; the subjective evaluation includes a questionnaire scale; and the objective evaluation includes at least one of a physiological index, behavior data, and eye movement data.

In a second aspect, the present disclosure provides an evaluation system. The evaluation system includes: a deployment subsystem configured to edit a human-machine interaction system, generate the human-machine interaction system, display the human-machine interaction system, select a target driving test scenario, acquire driving environment information of the target driving test scenario, and display the driving environment information on the human-machine interaction system; an evaluation subsystem configured to perform the method for evaluating the human-machine interaction of the vehicle described above in the first aspect; and a data communication module configured to send the human-factor interaction data and the external data from the deployment subsystem to the evaluation subsystem.

In a third aspect, the present disclosure provides a device for evaluating human-machine interaction of a vehicle. The device includes: an acquisition module configured to acquire, in a target driving test scenario, human-factor interaction data and external data, the human-factor interaction data being generated based on an interaction between a tester and a human-machine interaction system of the vehicle, and the external data being associated with driving of the vehicle; and an evaluation module, configured to evaluate an interaction element in the human-machine interaction system based on the human-factor interaction data and the external data to obtain evaluation data for the interaction element.

In a fourth aspect, the present disclosure provides an edge computing device. The edge computing device includes a memory and a processor. The memory is configured to store a computer program. The processor, when executing the computer program, performs the method for evaluating the human-machine interaction of the vehicle described above in the first aspect.

In a fifth aspect, the present disclosure provides a computer program product. The computer program product includes an instruction. A processor of a computer device, when executing the instruction, performs the method for evaluating the human-machine interaction of the vehicle described above in the first aspect.

In the above embodiments, the human-factor interaction data generated based on the interaction between the tester and the human-machine interaction system of the vehicle, and the external data associated with the driving of the vehicle are acquired in the target driving test scenario. The interaction element in the human-machine interaction system is evaluated based on the human-factor interaction data and the external data to obtain the evaluation data for the interaction element. The method for evaluating the human-machine interaction of the vehicle according to the present disclosure can comprehensively evaluate the human-machine interaction system of the vehicle, and the evaluation data can be used as a basis for optimizing a design of the human-machine interaction system, to improve the user experience of the human-machine interaction system of the vehicle.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a flowchart of a method for evaluating a human-machine interaction of a vehicle according to an embodiment of the present disclosure.
FIG. 2 is a schematic diagram of a human-machine interaction evaluation system of a vehicle according to an embodiment of the present disclosure.
FIG. 3 is a flowchart of driver experience evaluation for a human-factor intelligent vehicle cabin according to an embodiment of the present disclosure.
FIG. 4 is a schematic diagram of an evaluation system according to an embodiment of the present disclosure.
FIG. 5 is a schematic structural diagram of an evaluation subsystem according to an embodiment of the present disclosure.
FIG. 6 is a schematic diagram of clock synchronization of an evaluation subsystem according to an embodiment of the present disclosure.
FIG. 7 is a schematic diagram of a wearable eye tracker of an evaluation subsystem according to an embodiment of the present disclosure.
FIG. 8 is a schematic diagram of a physiological sensor of an evaluation subsystem according to an embodiment of the present disclosure.
FIG. 9 is a schematic structural diagram of an evaluation subsystem according to an embodiment of the present disclosure.
FIG. 10 is a schematic diagram of a human-machine interaction evaluation device of a vehicle according to an embodiment of the present disclosure.
FIG. 11 is a block diagram of an edge computing device according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

It should be noted that, in optional embodiments of the present disclosure, when the embodiments of the present disclosure are applied to a specific product or technology, relevant data of various objects such as personnel and vehicles involved need to obtain permission or consent from the objects, and the collection, use, and processing of the relevant data need to comply with relevant laws, regulations, and standards of relevant countries and areas. That is to say, if the data related to the objects is involved in the embodiments of the present disclosure, it needs to be obtained with authorization and consent of the objects, authorization and consent of relevant departments, and compliance with relevant laws, regulations, and standards of the country and area. In the embodiments, if personal information is involved, all personal information needs to be obtained with the consent of the individual. If sensitive information is involved, the separate consent of the subject of the information needs to be obtained, the embodiments also need to be implemented with authorization and consent of the object.

The technology of a human-machine interaction system of the vehicle mainly focuses on core hardware development and software algorithm development of Head Up Display (HUD) and Human Machine Interface (HMI), the HMI/HUD is not assessed from the perspective of comprehensive evaluation. In addition, an existing design assessment system is applicable to a single scenario, mainly focusing on subjective assessment, lacking multi-dimensional comprehensive assessment, and neglecting the construction of a HUD/HMI comprehensive evaluation system.

The present disclosure provides an HMI/HUD intelligent flexible comprehensive evaluation system, which mainly focuses on two core contents: an HMI/HUD design flexible deployment platform and an HMI/HUD multi-dimensional intelligent evaluation system. The HUD and HMI in the vehicle can perform human-machine interaction. In addition, interfaces on the vehicle that can perform human-machine interaction may further include a central control panel, an instrument panel, and the like, which can be evaluated in the present disclosure.

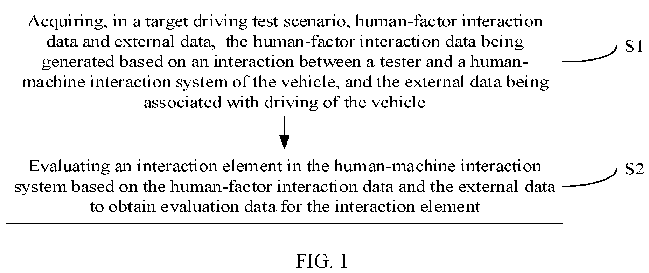

FIG. 1 is a flowchart of a method for evaluating a human-machine interaction of a vehicle according to an embodiment of the present disclosure.

As shown in FIG. 1, the method for evaluating the human-machine interaction of the vehicle includes operations at blocks S 1 and S2.

At block S 1, in a target driving test scenario, human-factor interaction data and external data are acquired. The human-factor interaction data is generated based on an interaction between a tester and a human-machine interaction system of the vehicle, and the external data is associated with driving of the vehicle.

At block S2, an interaction element in the human-machine interaction system is evaluated based on the human-factor interaction data and the external data to obtain evaluation data for the interaction element.

For example, a target driving scenario may be a virtual driving scenario, a real driving scenario, or a virtual-real combination driving scenario. After the target driving scenario is determined, the tester drives the vehicle in the target driving scenario and interacts with the human-machine interaction system of the vehicle. For example, the tester can obtain navigation information, multimedia information, driving speed, and other information by viewing the HUD system of the vehicle. The viewing behavior can be regarded as a fixation behavior and also an interaction behavior. The tester can control the human-machine interaction interface by voice, and voice control is also an interaction behavior. Interaction manners include manual interaction, visual interaction, voice interaction, etc. The manual interaction includes clicking, sliding, pressing, etc.

The human-factor interaction data, which is generated based on the interaction between the tester and the human-machine interaction system of the vehicle, and external data associated with the driving of the vehicle are acquired. Based on the human-factor interaction data and the external data, the interaction element in the human-machine interaction system is evaluated. For example, a certain interface or a certain control in the HUD system of the vehicle is evaluated based on the human-factor interaction data and the external data to obtain the evaluation data for the interaction element. An evaluation content at least includes evaluation of design elements such as an interface style and form, an interaction manner, and the like in the human-machine interaction system. The design elements include styles such as colors, proportions, positions, text, numbers, voices, and other styles, and further include different interaction manners.

In the target driving test scenario, the embodiments of the present disclosure support deployment of a user-defined design of the human-machine interaction system. A vehicle driver can interact with the human-machine interaction system, and multi-dimensional data such as interaction, human-factor, traffic, and vehicle can be recorded. Data analysis is performed based on multi-factor data. A comprehensive evaluation can be performed on the human-machine interaction system in combination with evaluation criteria. The evaluation data can be used as a basis for optimizing a design of the human-machine interaction system, to improve the user experience of the human-machine interaction system of the vehicle.

As an example, the human-machine interaction system includes at least one of a vehicle HUD system, an instrument panel, an instrument, a central control screen, a co-driver interaction device, and an entertainment screen.

As an example, the human-factor interaction data includes at least one of physiological data of the tester, eye movement data of the tester, electroencephalogram data of the tester, hand operation track data of the tester, motion posture data of the tester, face data of the tester, and voice data of the tester.

As an example, the external data associated with the driving of the vehicle includes at least one of driving data of the vehicle, external traffic data, external environment data, and voice data of the human-machine interaction system. For example, the driving data of the vehicle includes turning data of the vehicle, data that a vehicle pedal is depressed, and the like. For example, the external traffic data includes driving track data of the current vehicle, driving track data of other surrounding vehicles, and the like. For example, the external environment data includes weather data, illumination data, sound or voice data in the environment, and the like. For example, the voice data of the human-machine interaction system includes voice uttered by the human-machine interaction system in response to an instruction from the tester when the tester interacts with the human-machine interaction system.

For example, the human-factor interaction data of the tester, and the external data associated with the driving of the vehicle can be collected by various types of sensors. The external data associated with the driving of the vehicle can further be collected by an external device. For example, the external device may be a mobile phone, a vehicle-road coordination system, etc., to obtain external data such as navigation map information, and the vehicle can perform data interaction with the external device to receive data sent by the external device.

The method for evaluating the human-machine interaction of the vehicle of the present disclosure can assess the compatibility of interaction between the human-machine interaction system of the vehicle and the tester, to develop a more suitable human-machine interaction system of the vehicle and improve the driving experience. In addition, the method further supports the deployment of the user-defined design of the human-machine interaction system. The vehicle driver can interact with the human-machine interaction system, and the multi-dimensional data such as interaction, human factor, traffic, and vehicle can be recorded. The data analysis is performed based on the multi-factor data. The comprehensive evaluation can be performed on the human-machine interaction system in combination with the evaluation criteria. The evaluation data can be used as the basis for optimizing the design of the human-machine interaction system, to improve the user experience of the human-machine interaction system of the vehicle. Based on multi-dimensional human-factor interaction data and external data, the human-machine interaction system of the vehicle is evaluated to allow the evaluation results to be more accurate.

It can be understood that an evaluation method of the present disclosure can not only test the compatibility between the human-machine interaction system and the tester, but also evaluate a human-machine interaction scheme. In addition, the method can evaluate a quality of the interaction scheme, and optimize a design of the interaction scheme.

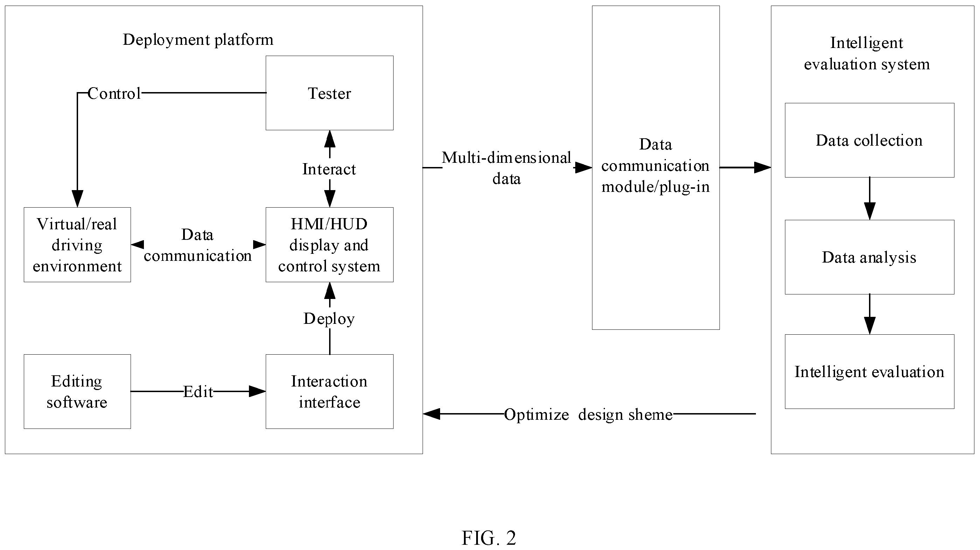

FIG. 2 is a schematic diagram of a human-machine interaction evaluation system of a vehicle according to an embodiment of the present disclosure.

As shown in FIG. 2, the human-machine interaction evaluation system of the vehicle mainly includes three parts: a deployment platform, a data communication module/plug-in, and an intelligent evaluation system.

The deployment platform includes the tester, a virtual/real driving environment, an

HMI/HUD display and control system, an editing software, and an interaction interface. The tester interacts with the HMI/HUD display and control system to allow the tester to control the virtual/real driving environment. Data communication is performed between the virtual/real driving environment and the HMI/HUD display and control system. The interaction interface is edited through the editing software including an HUD/HMI interface editing software. Content of the interaction interface, an interface communication mode, an interface interaction manner, and the like can be defined by the editing software. For example, an interaction interface style and the interaction manner are defined by the editing software. The interaction manner may be interaction through voice or touch. After the defined interaction interface is generated, the defined interaction interface is deployed and configured in the display and control system for display, to allow the tester to interact with the interaction interface in a test process.

The data communication module/plug-in is configured to send the collected multi-dimensional data to the intelligent evaluation system. The multi-dimensional data includes the human-factor interaction data generated based on the interaction between the tester and the human-machine interaction system of the vehicle, and the external data associated with the driving of the vehicle. Through the data communication module/plug-in, multi-dimensional information communication between the HUD/HMI deployment platform and the multi-dimensional intelligent evaluation system is available to perform the intelligent evaluation. The data communication module/plug-in is configured to transmit the human-factor interaction data and the external data to the intelligent evaluation system, to allow the intelligent evaluation system to evaluate the interaction element in the human-machine interaction system based on the human-factor interaction data and the external data.

As an example, the data communication module/plug-in can collect the human-factor interaction data and the external data during the tester driving through a data collection device. The human-factor interaction data includes physiological data, eye movement data, electroencephalogram data, hand operation track data, motion posture data, face data, and voice data. The human-factor interaction data is specific to the tester. The external data associated with the driving of the vehicle includes the driving data of the vehicle, the external traffic data, the external environment data, and the voice data of the human-machine interaction system. For example, the driving data of the vehicle includes the turning data of the vehicle, the data that the vehicle pedal is depressed, and the like. For example, the external traffic data includes the driving track data of the current vehicle, the driving track data of other surrounding vehicles, and the like. For example, the external environment data is for the external environment, and includes the weather data, the illumination data, the sound or voice data in the environment, and the like. For example, the voice data of the human-machine interaction system includes the voice of the interaction system. The data communication module/plug-in is configured to acquire multi-dimensional data and transmit the data to the intelligent evaluation system. The data communication modules/plug-ins are implemented as a real sensor, a virtual sensor, and a virtual-real combination sensor depending on a test phase.

The intelligent evaluation system is configured to analyze and evaluate the data based on the collected human-factor interaction data and the external data to obtain the evaluation data for the interaction element. The evaluation data may include forms such as an evaluation score, an evaluation report, and other forms, and the evaluation report includes qualitative analysis and quantitative assessment. In addition, an evaluation result of the intelligent evaluation system can further be used to optimize a design scheme of the deployment platform. In addition, the data communication module/plug-in can also support data communication between the virtual/real driving environment and the HMI/HUD display and control system in the deployment platform.

As an example, the intelligent evaluation system mainly includes three modules: a data collection module, a data analysis module, and an intelligent evaluation module. The data collection module is configured to collect data through a hardware collection device and transmit information through a data communication interface. The data analysis module is configured to process the collected human-factor interaction data and the external data. The intelligent evaluation module is configured to evaluate the interaction element in the human-machine interaction system.

The flexibility of the human-machine interaction evaluation system of the vehicle (i.e. the HMI/HUD intelligent flexible comprehensive evaluation system) is mainly reflected in the following aspects.
1) Flexible test scenarios. Both virtual simulation and real-vehicle testing can be taken into account.
2) Diversified test content. The HMI/HUD/HCI and other human-machine interaction schemes can be evaluated. A user-defined design of the human-machine interaction content is supported based on the human-machine interaction editing software. The human-machine interaction content includes color, text, shape, proportion, voice, interaction manner, and other interaction content.
3) User-defined options supported by a test module. Different combinations of test modules can be used to provide a user-defined test scheme based on the test requirements.

The comprehensive of the human-machine interaction evaluation system of the vehicle (i.e. the HMI/HUD intelligent flexible comprehensive evaluation system) is mainly reflected in the following aspects.
1) The assessment system includes the human-machine interaction editing software, human-machine interaction deployment platform, the data communication module, and a human-machine interaction evaluation platform, and covers a whole process of a human-machine interaction design, a human-machine interaction deployment, human-machine interaction evaluation data collection and analysis, and a human-machine interaction assessment.
2) Data integration. Interaction data (finger trajectory, voice interaction, click, etc.), human-factor data (eye movement, physiology, electrodermal activity, electroencephalography, etc.), traffic data (attention can be paid to space-time areas and an influence of the interaction manner on regional traffic can be analyzed), vehicle data (vehicle state data and manipulation data such as speed, heading, and acceleration), environment data (weather, illumination, etc.), are supported to be collected. A multi-factor analysis is supported to lay a foundation for the comprehensive evaluation. The collected data of various categories is expected to be to performed, by using intelligent algorithms, with intelligent analysis and evaluation and personalized data precipitation to form its own database. Personalized evaluation criteria are assisted in constructing.
3) Comprehensive evaluation scheme. The evaluation scheme includes subjective scale and objective data, qualitative analysis and quantitative assessment, etc., and also supports relevant data collected based on customer-defined analysis.
4) Evaluation criteria. The evaluation criteria support taking national standards and industry experience standards as criteria. User-defined criteria and personalized evaluation criteria are also supported to construct.

The method for evaluating the human-machine interaction of the vehicle is further described below in combination with the deployment platform, the data communication module/plug-in, and the intelligent evaluation system.

As an example, the method for evaluating the human-machine interaction of the vehicle further includes the following steps. Editing data for the human-machine interaction system is received. The editing data is used to edit at least one of a display content, an interaction manner, and a display form of the interaction element. The human-machine interaction system is generated based on the editing data and the human-machine interaction system is displayed to enable the tester to interact with the human-machine interaction system.

For example, editing operations for the interaction interface can be received through the editing software, and the editing data can be generated. The interaction interface can be edited based on the editing data, and the edited interaction interface can be configured in the HMI/HUD display and control system for display. The displayed interaction interface can be used as an operation interface of the human-machine interaction system. The human-machine interaction system may be the vehicle HUD system, an HMI interface (such as the central control screen) of the vehicle, the instrument panel, the instrument, the co-driver interaction device, or the entertainment screen. The tester interacts with the human-machine interaction system through the interaction interface in the test process.

As an example, the editing data is used to edit at least one of the display content, the interaction manner, and the display form of the interaction element. For example, the editing software is used to define an interaction interface content, the interaction manner, and the display form. The interaction manner is used in various ways such as voice or touch. The defined interaction interface is deployed and configured in the HUD/HMI display and control system. For example, the interaction interface style and the interaction manner are defined by the editing software. The interaction manner may be interaction through voice or touch. After the defined interaction interface is generated, the defined interaction interface is deployed and configured in the display and control system for display, to allow the tester to interact with the interaction interface in a test process.

As an example, a current evaluation purpose is to evaluate a display position of a certain control in the HUD/HMI interface. The position of the control can be defined on the editing software, and an interaction interface can be generated. The interaction interface is configured to the HUD/HMI display and control system, and the tester interacts with the control during driving.

The test content of the present disclosure is more flexible, and the HUD/HMI interface can be user-defined edited and deployed, including the display content, the display form, the interaction manner, etc.

As an example, the method for evaluating the human-machine interaction of the vehicle further includes the following steps. The target driving test scenario is selected from a candidate driving test scenario. Driving environment information of the target driving test scenario is acquired based on a data acquisition manner corresponding to the target driving test scenario. The driving environment information is displayed in the human-machine interaction system, to enable the tester to control the vehicle to drive through interacting with the human-machine interaction system based on the driving environment information.

For example, a plurality of candidate driving test scenarios is provided, and one is selected from the plurality of candidate driving test scenarios to serve as the target driving test scenario. Different candidate driving test scenarios correspond to different data acquisition manners. The driving environment information is acquired based on the data acquisition manner corresponding to the target driving test scenario. The driving environment information includes vehicle state information, road information, traffic information, service information, intelligent perception information, and the like. The driving environment information is displayed in the human-machine interaction system to enable the tester to control the vehicle to drive through interacting with the human-machine interaction system based on the driving environment information. For example, the acquired information of a road around the vehicle is displayed in the HUD/HMI display and control system to enable the tester to interact with the human-machine interaction system.

As an example, the HUD/HMI display and control system is configured to acquire the driving environment information of the virtual/real driving environment through a communication interface (the communication interface may be provided by the data communication module/plug-in), and the driving environment information includes the vehicle state information, the road information, the traffic information, the service information, the intelligent perception information, and the like. A virtual/real driving environment module includes various sensors, and can acquire information of the real environment. The virtual/real driving environment module can further interact with the external device to acquire information sent by the external device. The external device may be the mobile phone, the vehicle-road coordination system, etc. For example, the navigation map is acquired through the mobile phone. After the acquired driving environment information is processed by the HUD/HMI built-in software algorithms, it will be displayed in the HUD/HMI display and control system in various types such as text, image, and voice, and include various styles such as image, color, and sound effect. For example, taking the driving environment information including the traffic information as an example, collected positions of other vehicles or pedestrians around the vehicle will be displayed in the HUD/HMI display and control system, to enable the tester to interact with the human-machine interaction system.

As an example, the candidate driving test scenario includes at least one of a virtual driving test scenario, a virtual-real combination driving test scenario, and a real driving test scenario.

A data acquisition manner corresponding to the virtual driving test scenario includes at least one of a manner of generating data based on a virtual software and a manner of collecting data through a virtual sensor.

A data acquisition manner corresponding to the virtual-real combination driving test scenario includes at least one of the manner of generating data based on the virtual software, the manner of collecting data through the virtual sensor, a manner of collecting data through a real sensor, and a manner of receiving data from an external device.

A data acquisition manner corresponding to the real driving test scenario includes at least one of the manner of collecting data through the real sensor and the manner of receiving data from the external device.

For example, the candidate driving test scenario includes the virtual driving test scenario, the virtual-real combination driving test scenario, and the real driving test scenario. The virtual driving test scenario can simulate the vehicle, the driving environment, the virtual people, etc. with a simulation tool. The human-factor interaction data generated based on the interaction between the tester and the human-machine interaction system of the vehicle, and external data associated with the driving of the vehicle are collected by the virtual tool. The virtual tool can be virtual software, the virtual sensor, etc. For example, the human-factor interaction data of the tester and the external data associated with the driving of the vehicle can be collected by the virtual software and the virtual sensor. In the virtual-real combination driving test scenario, in addition to the data acquisition manner corresponding to the virtual driving test scenario mentioned above, the human-factor interaction data and the external data may be acquired through the real sensor and the external device. For example, the navigation map is obtained by the mobile phone. The real driving test scenario is a real road test, and the corresponding data acquisition manner is to collect the human-factor interaction data and the external data by the real sensor and the real external device.

In an exemplary embodiment of the present disclosure, the test scheme supports testing in a virtual simulation driving environment, thereby reading data such as the vehicle and the traffic through the communication module and acquiring the human-factor data through the eye tracker, a physiological bracelet, and other human-factor measurement sensors. The test scheme further supports a real vehicle field test, thereby acquiring information such as relevant manipulation through the sensor, and transmitting records by using the communication module. The virtual simulation driving environment test or the real vehicle field test can be selected based on test conditions and stages.

The human-machine interaction system supports virtual deployment, virtual-real combination deployment, and hardware deployment. For example, HUD virtual deployment floats on a driving screen with a transparent background. The deployment is taken through hardware such as the central control screen.

As an example, the virtual driving test scenario includes a virtual vehicle cabin, a virtual human-machine interaction system, and a virtual driving simulation environment. The virtual-real combination driving test scenario includes a real vehicle cabin, a real human-machine interaction system, and the virtual driving simulation environment. The real driving test scenario includes the real vehicle cabin, the real human-machine interaction system, and a real driving environment.

As an example, the HUD/HMI display and control system implements a pure virtual simulation environment display simulation test, a virtual-real combination environment test, and a real vehicle display and control field test based on the test stages. The target driving test scenario corresponding to the pure virtual simulation environment display simulation test is the virtual driving test scenario, and the virtual driving test scenario includes the virtual vehicle cabin, the virtual human-machine interaction system, and the virtual driving simulation environment. The virtual-real combination driving test scenario includes the real vehicle cabin, the real human-machine interaction system, the virtual driving simulation environment, and the real human-machine interaction system such as the HMI/HUD hardware and software. A real vehicle display and control field test includes the real driving test scenario. The real driving test scenario includes the real vehicle cabin, the real human-machine interaction system, and the real driving environment. The real vehicle display and control field test can also be called the road test. The present disclosure allows flexibility in selecting test types based on the required driving scenario.

As an example, the method for evaluating the human-machine interaction of the vehicle further includes the following steps. Updated driving environment information is acquired subsequent to the tester controlling the vehicle to drive through interacting with the human-machine interaction system based on the driving environment information. The updated driving environment information is displayed in the human-machine interaction system.

For example, the tester observes the human-machine interaction system, e.g., observing the HMI/HUD display and control interface, to interact with it. The tester controls the driving of the vehicle to obtain the updated driving environment information, e.g., obtaining necessary information such as updated navigation, status, service, intelligent perception, and the like. The updated driving environment information is displayed in the human-machine interaction system, e.g., the updated navigation information is displayed in the HMI/HUD display and control interface.

As an example, the tester can observe and interact with the HMI/HUD interface to obtain the necessary information such as navigation, status, service, intelligent perception, and the like. On this basis, the tester makes a driving decision and manipulates the vehicle. After operating the vehicle, the vehicle and environmental information are updated in real-time, and data of the display and control system is updated in real-time. This forms a closed loop of information and builds a HUD/HMI design deployment platform.

The test module of the HUD/HMI deployment platform of the present disclosure is flexible and can be used for comprehensive evaluation of HUD, HMI, and HUD/HMI. There are various test types, such as a pure virtual test, a virtual-real combination test, and a real vehicle field test for the HUD/HMI. That is, virtual driving in the virtual environment, driving in the virtual-real combination environment, and driving in the real environment (road) are available. The testing content is flexible, the HUD/HMI interface can be user-defined edited and deployed, including the display content, the display form, the interaction manner, etc.

As an example, evaluating the interaction element in the human-machine interaction system based on the human-factor interaction data and the external data includes the following steps. The human-factor interaction data and the external data are processed to obtain processed data and a preliminary evaluation result. The processed data and the preliminary evaluation result are processed based on evaluation rule data to obtain the evaluation data for the interaction element.

For example, the human-factor interaction data and the external data are preliminarily processed to obtain the processed data and the preliminary evaluation result. For example, the preliminary evaluation result preliminarily indicates whether interaction compatibility between the interaction element and the tester is high enough, or the preliminary evaluation result includes preliminary evaluation data for the interaction element, and final evaluation data can be obtained based on the preliminary evaluation result. After the preliminary evaluation result is obtained, the processed data and the preliminary evaluation result are processed based on the evaluation rule data to obtain the evaluation data for the interaction element.

As an example, processing the human-factor interaction data and the external data to obtain the processed data and the preliminary evaluation result includes the following steps. The human-factor interaction data and the external data are preprocessed to obtain a preprocessing result as the processed data. The preprocessing result includes at least one of labeling the human-factor interaction data and the external data, dividing data segments of the human-factor interaction data and the external data, determining information about the human-machine interaction system in which the tester is interested, and performing smoothing process on the human-factor interaction data and the external data. The preliminary evaluation result is obtained based on the preprocessing result. The preliminary evaluation result includes at least one of association information between the human-factor interaction data and the external data, and evaluation information for the interaction element.

For example, preprocessing the human-factor interaction data and the external data includes labeling the human-factor interaction data and the external data, dividing data segments of the human-factor interaction data and the external data, determining the interested information, and performing the smoothing process on the human-factor interaction data and the external data. For example, the human-factor interaction data and the external data are labeled, such as which data indicates that the vehicle is turning, and for which data the tester does not respond to the interaction interface. The human-factor interaction data and the external data are divided into data segments, such as which segment of data corresponding to a case that the vehicle driving on a straight road segment. The human-factor interaction data and the external data are divided into area of interest, such as a visual fixation area of the tester. The built-in algorithms can also be used to perform preprocessing operations such as the smoothing process on the human-factor interaction data and the external data to obtain the preprocessing result. Based on the preprocessing result, the preliminary evaluation result is obtained.

As an example, taking evaluation for a control on the interaction interface as an example, whether the user fixations at the control is known based on the eye movement data to know whether a position of the control on the interaction interface is appropriate. For example, based on the environmental information (such as night or direct sunlight) and the eye movement data (an area of interest at which the tester fixations can be known), whether the control is properly positioned on the interaction interface HUD can be known. For example, the tester cannot easily fixate at or find the control at night or in direct sunlight, indicating that the control is not positioned properly on the interaction interface. The preliminary evaluation result can further include analyzing the association between multi-dimensional data, and the preliminary evaluation result includes association information between the human-factor interaction data and the external data, such as whether there is association between the environment data and the eye movement data and a degree of association. The preliminary evaluation result can further be the evaluation information for the interaction element, and the preliminary evaluation result includes the preliminary evaluation data for the interaction element.

In an exemplary embodiment of the present disclosure, an assessment manner includes the subjective assessment and the objective assessment. The subjective assessment includes scales, questionnaires, and other forms to evaluate the design of the human-machine interaction system through inquiry and scoring. The objective assessment includes multi-dimensional objective data such as interaction, human factor, traffic, and vehicle.

In terms of assessment means, there is a built-in multi-dimensional data processing mean and a user-defined processing mean. The built-in multi-dimensional data processing means, on the one hand, has a personalized processing means for different data, for example, the eye movement data may be used for the division of the area of interest, and statistics of eye movement characteristics within the area of interest may be performed. On the other hand, there is a common processing means for data, such as performing smoothing on the data, extracting data index (average value, median value, etc.), cross-analyzing the multi-dimensional data, etc. In addition, artificial labeling may be made to divide different data segments for quantitative analysis, such as marking different weather and road section types, which lays a foundation for the quantitative characterization of the assessment result. The data index is helpful for artificial analysis or inputted into an intelligent evaluation mode as a data preprocessing result.

The assessment result includes a qualitative assessment result and a quantitative assessment result, which support an output of an evaluation report.

As an example, the evaluation data includes an evaluation score, and the evaluation rule data includes an evaluation index and a score corresponding to the evaluation index. After the processed data and the preliminary evaluation result are obtained, processing the processed data and the preliminary evaluation result based on the evaluation rule data to obtain the evaluation data for the interaction element includes the following steps. The processed data and the preliminary evaluation result are processed to obtain an index value corresponding to the evaluation index. The evaluation score for the interaction element is obtained based on the index value and the score corresponding to the evaluation index.

For example, the evaluation rule data includes the evaluation index and the score corresponding to the evaluation index. The processed data and the preliminary evaluation result are processed to obtain the index value corresponding to the evaluation index. For example, the processed data indicates that a size of a control in the interaction interface is too small, and it takes time and effort for the tester to find the control in an interaction process. For example, the preliminary evaluation result includes the preliminary evaluation data for the control. The preliminary evaluation data is relatively small, indicating that the interaction compatibility between the control and the tester is low, the design scheme for the human-machine interaction system is not optimized enough, and the user experience is poor. In order to further evaluate the control more accurately, a further evaluation needs to be performed based on the evaluation rule data. For example, the evaluation index is the size of the control. When the size of the control is greater than a preset size threshold, the evaluation data for the control on the interaction interface is 90 points, and when the size of the control is smaller than another preset size threshold, the evaluation data for the control on the interaction interface is 60 points. The evaluation data for the interaction element is obtained based on the index value and the score corresponding to the evaluation index. For example, the evaluation data obtained by evaluating the control based on the evaluation rule data is 60 points.

As an example, after integrating, classifying, and intelligently analyzing the multi-dimensional data, the intelligent evaluation system automatically generates the evaluation report based on basic evaluation data (such as a national standard file, which is a standard file), the experience evaluation data (such as industry experience data), the user-defined evaluation data (such as user-defined criteria data), etc., and the evaluation report includes the evaluation data for the interaction element. For example, analysis is performed based on the national standard file, when the size of the control is greater than a preset size threshold, the score for the control on the interaction interface is 90 points, and when the size of the control is smaller than another preset size threshold, the score for the control on the interaction interface is 60 points. Analysis is performed based on industry experience, for example, for a certain function in the vehicle, a manner of voice interaction has a higher score and a manner of text interaction has a lower score. Analysis is performed based on the user-defined criteria, for example, a position of the control on the HUD for the interaction interface is known based on the combined dimensions of eye movement and environment. When the eye movement data indicated that a fixation duration of the tester is short in the dark or in direct sunlight, the position of the control on the interaction interface has a lower score. The evaluation report generated above can provide a decision basis for optimizing a design of the HUD/HMI.

For example, the evaluation score is just one specific example of the quantitative analysis. The evaluation method of the present disclosure can also support the qualitative analysis, subjective assessment, etc. Therefore, the evaluation data includes other contents besides the evaluation score. For example, the evaluation data can be outputted in the form of an evaluation report, which includes the qualitative analysis and the quantitative assessment. The qualitative analysis can enumerate a relevant influence of design content on the driver, including fluctuation of the human-factor data and the vehicle data, etc. The quantitative assessment gives a comprehensive quantitative evaluation result from the perspective of criteria compliance degree, driving load, operation portability, scenario applicability, etc., which may be a score or a grade.

In addition to the multi-dimensional evaluation data, the evaluation of the interaction element in the human-machine interaction system further includes subjective evaluation data and objective evaluation data.

As an example, evaluating the interaction element in the human-machine interaction system based on the human-factor interaction data and the external data includes the following steps. Subjective evaluation data for the interaction element in the human-machine interaction system is acquired. The interaction element in the human-machine interaction system is evaluated based on the human-factor interaction data, the external data, and the subjective evaluation data.

For example, a questionnaire survey may be designed for the user to fill in, the subjective evaluation data of the interaction element in the human-machine interaction system can be obtained in the form of the questionnaire survey, and the interaction element in the human-machine interaction system can be evaluated in combination with the subjective evaluation data, the human-factor interaction data, and the external data.

The interaction element in the human-machine interaction system is evaluated based on the subjective evaluation data, and the evaluation result is more suitable for a subjective feeling of the tester, to allow the evaluation result to be more accurate.

As an example, the method for evaluating the human-machine interaction of the vehicle further includes assessing the evaluation rule data, where the evaluation rule data includes at least one of basic evaluation data, experience evaluation data, and user-defined evaluation data.

For example, the evaluation rule data includes rule data of rules such as the above-mentioned national standard file, the industry experience, the user-defined criteria, etc. The basic evaluation data may be referred to as national standard file rule data. The experience evaluation data is industry experience rule data, and the user-defined evaluation data is user-defined criteria rule data. The present disclosure further includes the assessment of the evaluation rule data itself.

As an example, assessing the evaluation rule data includes the following steps. In another driving test scenario different from the target driving test scenario, the interaction element in the human-machine interaction system is assessed based on the evaluation rule data to obtain an objective assessment result. In the another driving test scenario, a subjective assessment result for the interaction element in the human-machine interaction system is obtained. An assessment result for the evaluation rule data is obtained based on the objective assessment result and the subjective assessment result.

As an example, the evaluation rule data is used as an assessment standard for the interaction element in the human-machine interaction system, and the evaluation rule data itself may also be evaluated. The evaluation rule data includes the above national standard file, the industry experience, and the user-defined criteria. For example, in the beginning, the evaluation rule data may only include the national standard file and the industry experience, and the evaluation rule data may be used to evaluate the interaction interface in the virtual scenario. After later data is accumulated, the user-defined criteria can be added to the evaluation rule data, and then the interaction interface can be evaluated in other scenarios (such as the real scenario). In addition, the evaluation accuracy of the interaction interface based on the evaluation rule data can be determined subjectively (questionnaire), and whether the evaluation rule data is appropriate can be known based on the accuracy. The evaluation rule data are assessed based on the objective assessment result and the subjective assessment result, and the assessment result is more accurate.

With the rapid development of automobile intelligence, people's requirements for automobile comfort are getting higher and higher. Especially, the driver experience of an automobile intelligent vehicle cabin becomes more and more important, and the driver experience test assessment of the automobile intelligent vehicle cabin becomes an important way to measure a driver experience effect. In the related art, an experience test scenario can be selected for travel demand, and data in the scenario can be analyzed and processed to obtain an experience test result of the driver. The vehicle cabin can be assessed to obtain an experience test assessment result of the vehicle cabin. However, when the driver experience test is performed on the vehicle cabin of the vehicle, there is no objective evaluation basis for the driver experience, which cannot meet an actual evaluation requirement of the intelligent vehicle cabin and affects the driver experience in an evaluation process. In this way, the efficiency and accuracy of the evaluation are low, which needs to be improved urgently.

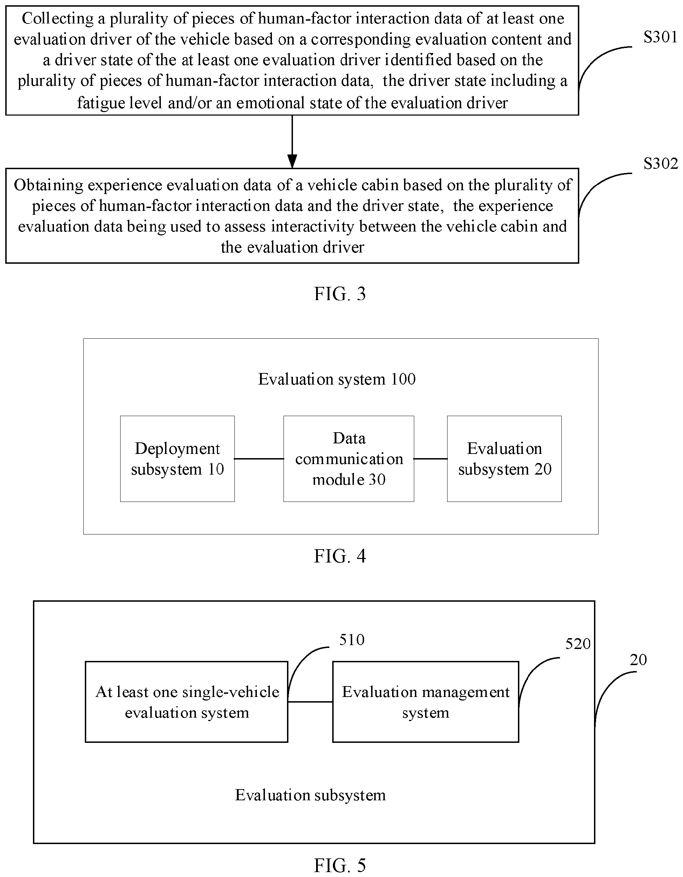

As an example, as shown in FIG. 3, the tester includes an evaluation driver. The method further includes operations at blocks. At block S301, a plurality of pieces of human-factor interaction data of at least one evaluation driver of the vehicle based on a corresponding evaluation content and a driver state of the at least one evaluation driver identified based on the plurality of pieces of human-factor interaction data are collected. The driver state includes a fatigue level and/or an emotional state of the evaluation driver. At block S302, experience evaluation data of a vehicle cabin is obtained based on the plurality of pieces of human-factor interaction data and the driver state. The experience evaluation data is used to assess interactivity between the vehicle cabin and the evaluation driver.

For example, in an embodiment of the present disclosure, the human-factor interaction data may be sensing data. The sensory data may be, but is not limited to, collected by sensors.

For example, in an embodiment of the present disclosure, the method further includes synchronizing the plurality of pieces of human interaction data collected for a same evaluation driver. The obtaining the experience evaluation data of the vehicle cabin based on the plurality of pieces of human-factor interaction data and the driver state includes obtaining the experience evaluation data of the vehicle cabin based on the plurality of pieces of synchronized human-factor interaction data and the driver state.

For example, in an embodiment of the present disclosure, collecting sensing data generated by at least one evaluation driver based on the corresponding evaluation content includes: collecting at least one of the eye movement data, physiological data, behavior data, and voice data of the at least one evaluation driver as sensing data; and evaluating the fatigue level and/or the emotional state of at least one evaluation driver based on the sensing data as driver state.

For example, in an embodiment of the present disclosure, the collecting at least one of the eye movement data, physiological data, behavior data, and voice data of the at least one evaluation driver as the sensing data includes: synchronizing the plurality of pieces of eye movement data, physiological data, behavior data, and voice data of the at least one evaluation driver.

For example, in an embodiment of the present disclosure, obtaining the experience evaluation data of the human-factor intelligent vehicle cabin based on the sensing data and the driver state includes: executing at least one of a test project management task, a vehicle model management task, a tester management task, and a primary tester management task; executing a resource library management task; generating an evaluation process and the corresponding evaluation content based on a timeline; executing a data analysis task based on the sensing data and the driver state; and obtaining corresponding weights of the sensing data and the driver state based on the index system, and performing task execution by utilizing the weights.

For example, in an embodiment of the present disclosure, the test project management task includes at least one of a project creation task, a personnel assignment task, a vehicle model association task, and a project progress display task. The vehicle model management task includes at least one of a creation task and a management task of vehicle model information. The tester management task includes at least one of a tester adding task, a tester demographic information adding task, a demographic information user-defined adding task, a tester history recording task, a tester import and export task, and a demographic information statistics task. The primary tester management task includes at least one of a primary tester adding task and a primary tester history recording task.

For example, in an embodiment of the present disclosure, the resource library management task includes one or more of a use case management subtask, a questionnaire scale management subtask, a behavior experiment management subtask, a journey management subtask, and a voice evaluation management subtask in a subjective evaluation task, and an evaluation tool management subtask and a state evaluation algorithm model management subtask in an objective evaluation task.

For example, in an embodiment of the present disclosure, the data analysis task includes at least one of a video behavior data analysis task, an eye movement data analysis task, a physiological data analysis task, a voice data analysis task, and a visual report task.

According to the technical means, the evaluation driver can be subjected to an experience test by utilizing the generated evaluation content, and the experience evaluation data of the human-factor intelligent vehicle cabin can be obtained based on the sensing data and the driver state feedback of the evaluation driver. Therefore, a comprehensive and accurate evaluation system specification is provided for experience assessment of the evaluation driver, and the actual evaluation requirement of the human-factor intelligent vehicle cabin is met, thereby effectively improving efficiency and accuracy of the evaluation. Therefore, problems that, when the driver experience test is performed on the vehicle cabin of the vehicle, the driver experience in the evaluation process is affected due to the objective evaluation basis of the driver experience is lacking and the actual evaluation requirement of the vehicle cabin cannot be met, and the efficiency and accuracy of the evaluation are low are solved.

In combination with the above, it can be seen that a process of evaluating the human-machine interaction system in the present disclosure may include the following steps: 1. human-machine interaction system design; 2. human-machine interaction system deployment based on the test scenarios; 3. device configuration measurement with the evaluation driver in place; 4. driving with the human-machine interaction; 5. multi-dimensional data collection; 6. multi-dimensional data processing; 7. human-machine interaction evaluation; 8. evaluation report data; 9. human-machine interaction scheme update; 10. next round of evaluation.

In addition, human-machine interaction evaluation criteria can also be evaluated, including the following steps: 1. basic testing of the same human-machine interaction system; 2. replacement of the evaluation criteria; 3. determination of a match degree between evaluation results of different evaluation criteria and actual assessment results.

Through the deployment platform, the data communication module/plug-in, and the intelligent evaluation system, the present disclosure constructs an intelligent flexible comprehensive evaluation test system of the HUD/HMI design, which can flexibly define test content, scenario application, etc., collect and analyze the multi-dimensional data, perform intelligent/user-defined evaluation, and lay a foundation for intelligently optimizing and assessing the design of HUD/HMI.

The present disclosure further provides an evaluation system. As shown in FIG. 4, an evaluation system 100 includes a deployment subsystem 10 configured to edit a human-machine interaction system, generate the human-machine interaction system, display the human-machine interaction system, select a target driving test scenario, acquire driving environment information of the target driving test scenario, and display the driving environment information on the human-machine interaction system; an evaluation subsystem 20 configured to perform the method for evaluating the human-machine interaction of the vehicle described above; and a data communication module 30 configured to send the human-factor interaction data and the external data from the deployment subsystem 10 to the evaluation subsystem 20.

The deployment subsystem 10 includes the deployment platform shown in FIG. 2. The evaluation subsystem 20 includes the intelligent evaluation system shown in FIG. 2. The data communication module 30 includes the data communication module/plug-in shown in FIG. 2.

As an example, as shown in FIG. 5, the evaluation subsystem 20 includes at least one single-vehicle evaluation system 510 configured to collect the sensing data generated by the at least one evaluation driver based on the corresponding evaluation content, and identify the driver state of the at least one evaluation driver based on the sensing data.

It can be understood that the at least one single-vehicle evaluation system 510 in the embodiments of the present disclosure may be a sub-server. Efficient data communication and task management can be realized between a main server and an on-site sub-server. An on-site evaluation terminal can perform professional and systematic evaluation operations based on received evaluation journey requirements, and after the evaluation work is completed, the data may be automatically or manually uploaded to the main server.

In an actual implementation process, the embodiments of the present disclosure can collect the sensing data generated by the at least one evaluation driver based on corresponding evaluation content through the at least one single-vehicle evaluation system 510, and identify the driver state of the at least one evaluation driver based on the sensing data. For example, the embodiments of the present disclosure can collect a blink frequency, a pupil state, etc. of the driver. When the blink frequency is 11 blinks per minute and a pupil size remains relatively stable, the driver state of the driver is identified as a driving concentration state. For another example, the embodiments of the present disclosure can identify the driver state of the driver as a driving fatigue state when the blink frequency is 6 blinks per minute and the pupil size is contracted.

According to the embodiments of the present disclosure, the experience test can be performed on the driver by using the generated evaluation content. Therefore, the driver state of the driver is identified, and further support is provided for subsequent driver experience assessment. A targeted evaluation is performed to meet the actual evaluation requirement of the human-factor intelligent vehicle cabin, thereby ensuring the evaluation subsystem to be intelligent and reliable.

For example, in an embodiment of the present disclosure, each of the at least one single-vehicle evaluation system 510 includes: a collection component 101 configured to collect at least one of the eye movement data, physiological data, behavior data, and voice data of the at least one evaluation driver as sensing data; and an evaluation component 102 configured to evaluate the fatigue level and/or the emotional state of the at least one evaluation driver as driver state based on the sensing data.

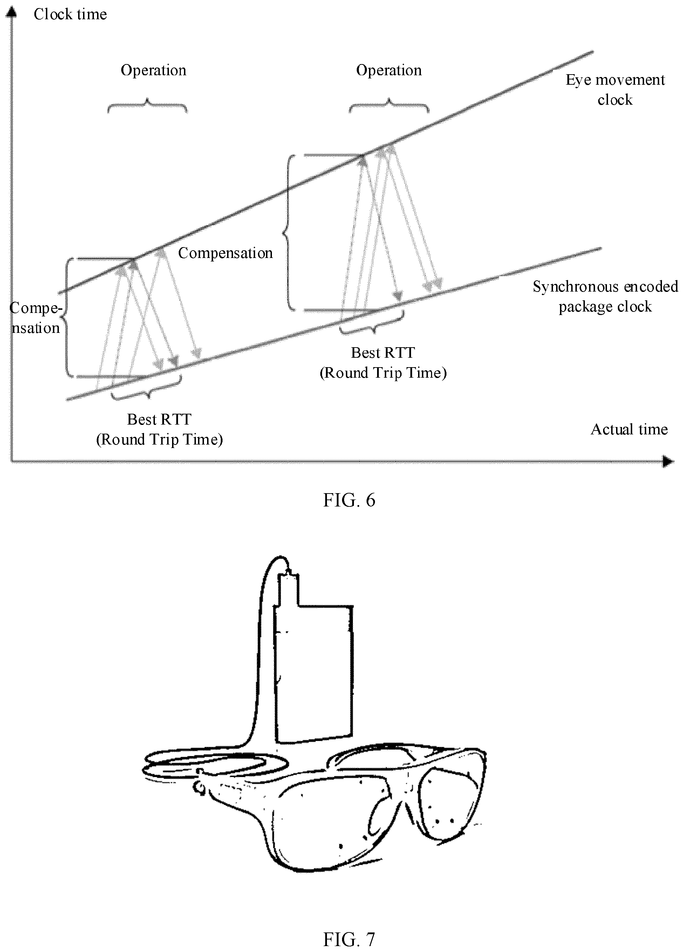

It can be understood that, when accessing the eye movement data, the physiological data, the video behavior data, and the voice data in the evaluation execution process, the embodiments of the present disclosure can perform real-time synchronous collection. A synchronization time interval can be, but is not limited to, smaller than or equal to 10 ms, thereby ensuring the consistency of time points of multimodal data, and marking events and fragments of different types of data. As shown in FIG. 6, by adopting network time protocol (NTP), a clock of a computer can be synchronized to Universal Time Coordinated (UTC), and timestamps and calibration algorithms are used to achieve clock synchronization to ensure that clocks of multiple devices or systems remain consistent.

In the actual execution process, as shown in FIG. 7, the eye movement data of the at least one evaluation driver may be collected by the collection component 101. For example, the eye movement data in a single-vehicle evaluation execution process can be collected in real-time by the wearable eye tracker, including but not limited to collecting data index such as pupils, fixation, and blink, to facilitate further analysis of the eye movement state and a cognitive processing ability of the driver in the driving process.

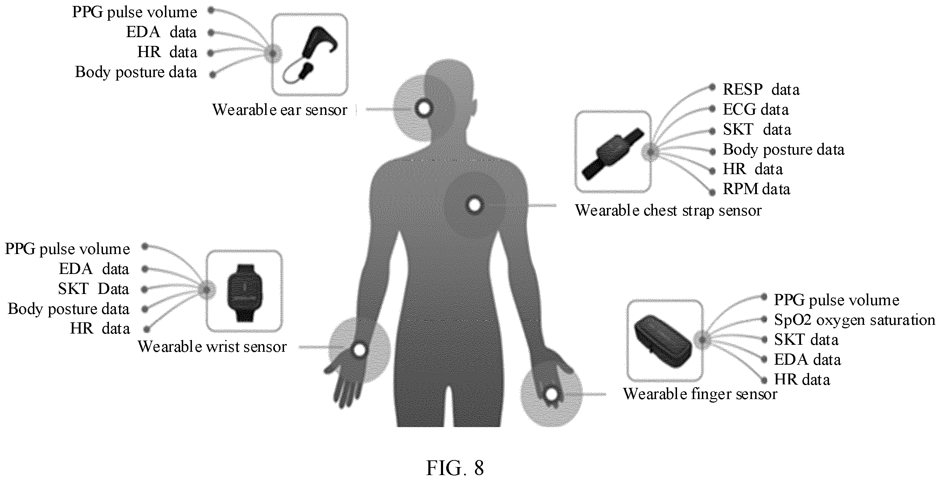

In the embodiments of the present disclosure, the physiological data of the at least one evaluation driver can be collected by the collection component 101. For example, a physiological index of the driver is collected in real-time by a physiological sensor, including but not limited to physiological data such as electrocardiogram, pulse, electrodermal activity, electromyography, respiration, etc. to facilitate further statistical analysis of psychological state changes of the driver during driving, etc. Supporting hardware devices are shown in FIG. 8.

In the embodiments of the present disclosure, the behavior data of the at least one evaluation driver can be collected by the collection component 101. For example, the behavior data in the single-vehicle evaluation execution process can be collected in real-time by a behavior observation camera, and an operation behavior can be recorded in the form of video. The behavior may be user-defined classified based on the characteristics and rules, and comprehensive statistics may be performed. Table 1 is a table of supporting hardware devices for collecting the behavior data.

**Table 1**

| **Number** | **Hardware Name** |
|---|---|
| 1 | First-Person View Recorder |
| 2 | Touch Pen |
| 3 | Handheld Terminal |
| 4 | Behavior Recording Camera |
| 5 | High-Speed Camera |

In the embodiments of the present disclosure, the voice data of the at least one evaluation driver can be collected by the collection component 101. For example, by a voice device, voice interaction data carried by a real vehicle can be collected in real-time, and voice data of the whole testing process can be collected. Content of the voice data includes, but is not limited to, voice instruction, voice emotion, dialogue content, etc. The collected voice data can be labeled and classified afterward, and voice interaction events and background noise can be extracted for subsequent further analysis. Table 2 is a table of supporting hardware devices for collecting the voice data.

**Table 2**

| **Number** | **Hardware Name** |
|---|---|
| 1 | In-Car Host |
| 2 | Synthetic Mouth |
| 3 | Microphone |
| 4 | High-Fidelity Speaker |
| 5 | Accessories Pack |

In the embodiments of the present disclosure, the sensing data may be used to evaluate the fatigue level of the driver, or the sensing data may be used to evaluate the emotional state of the driver. The sensing data may further be used to evaluate the fatigue level and emotional state of the driver to analyze different states of the driver in the driving process in a targeted manner, thereby providing the comprehensive and accurate evaluation system specification for the driver experience assessment and meeting the actual requirement of the vehicle cabin.

For example, in an embodiment of the present disclosure, the collection component 101 is further configured to synchronize the plurality of pieces of eye movement data, physiological data, behavior data, and voice data of the at least one evaluation driver.

It can be understood that the eye movement data in the embodiments of the present disclosure includes, but is not limited to, pupil, fixation, blink, and other data. The physiological data includes, but is not limited to, electrocardiogram, pulse, electrodermal activity, electromyography, respiration, and other data. The behavior data includes, but is not limited to, behavior data collected by the camera. The voice data includes, but is not limited to, voice instruction, voice emotion, dialogue content, and other data.

In an actual execution process, the embodiments of the present disclosure can synchronize the plurality of pieces of eye movement data, physiological data, behavior data, and voice data of the at least one evaluation driver through the collection component 101. For example, the embodiments of the present disclosure can synchronize the eye movement data when the driver blinks, the physiological data when the driver breathes, and the voice data when the driver issues the voice instruction, to ensure consistency of time points of multimodal data.

According to the embodiments of the present disclosure, the plurality of pieces of eye movement data, physiological data, behavior data, and voice data of the driver can be synchronized. In this way, the driving behavior and driving state of the driver are monitored and evaluated in real-time, thereby effectively improving the efficiency and accuracy of evaluation.

An evaluation management system 520 is configured to generate evaluation content corresponding to the at least one evaluation driver, deliver the evaluation content to the at least one single-vehicle evaluation system 510, and receive the sensing data and the driver state uploaded by the at least one single-vehicle evaluation system 510, to obtain the experience evaluation data of the human-factor intelligent vehicle cabin based on the sensing data and the driver state. The experience evaluation data is used to assess the interactivity between the human-factor intelligent vehicle cabin and the driver.

It can be understood that the present disclosure can perform the driver experience evaluation of the human-factor intelligence vehicle cabin. The human-factor intelligence is based on human-factor engineering technology combined with Artificial Intelligence (AI) technology. The human-factor engineering technology is an engineering and design of applying human psychological and physiological principles to products, processes, and systems. In other words, a human-machine-environment system is designed and improved based on human characteristics. Combining this technology with AI technology can enable the machine to interact with humans more intelligently. The driver state in the embodiments of the present disclosure includes, but is not limited to, states such as a driving fatigue state, a driving concentration state, a positive emotional state, a neutral emotional state, and a negative emotional state. The experience evaluation data of the human-factor intelligent vehicle cabin includes, but is not limited to, data such as satisfaction, neutrality, and dissatisfaction. The sensing data may be collected through, but is not limited to, the sensor.

For example, the embodiments of the present disclosure can generate evaluation content on driving satisfaction of at least one evaluation driver and send the evaluation content on driving satisfaction to the at least one single-vehicle evaluation system 510, to meet the actual evaluation requirement of the human-factor intelligent vehicle cabin. The embodiments of the present disclosure can collect sensing data of a stable pulse of the driver and the positive emotional state of the driver through the physiological sensor. The experience evaluation data of the human intelligent vehicle cabin, obtained based on the sensing data and the positive emotional state, is satisfaction. For another example, the embodiments of the present disclosure can generate evaluation content on driving satisfaction of at least one evaluation driver and send the evaluation content on driving satisfaction to the at least one single-vehicle evaluation system 510. Sensing data of behavior panic of the driver and the negative emotional state of the driver are collected through the camera. The experience evaluation data of the human-factor intelligent vehicle cabin obtained based on the sensing data and the negative emotional state is unsatisfactory. The experience evaluation data is used to assess the interactivity between the human-factor intelligent vehicle cabin and the driver.

According to the embodiments of the present disclosure, the experience evaluation data of the human-factor intelligent vehicle cabin can be obtained based on the sensing data and the driver state feedback of the driver. In this way, the comprehensive and accurate evaluation system specification is provided for the driver experience assessment, the actual evaluation requirement of the human-factor intelligent vehicle cabin is met, thereby effectively improving the efficiency and accuracy of the evaluation.

For example, in an embodiment of the present disclosure, the evaluation management system 520 includes a system management module 201, a resource library module 202, an evaluation design module 203, a data analysis module 204, and an index system and weight management module 205. The system management module 201 is configured to execute at least one of the test project management task, the vehicle model management task, the tester management task, and the primary tester management task of the evaluation subsystem 20. The resource library module 202 is configured to execute the resource library management task of the evaluation subsystem 20. The evaluation design module 203 is configured to invoke the resource library module 202 to generate the evaluation process and the corresponding evaluation content based on the timeline. The data analysis module 204 is configured to execute the data analysis task of the evaluation subsystem 20 based on the sensing data and the driver state. The index system and weight management module 205 are configured to construct the index system of the evaluation subsystem and obtain the corresponding weights of the sensing data and the driver state based on the index system, to perform the task execution by utilizing the weights.

In the actual execution process, the system management module 201 in the evaluation management system 520 can execute the test project management task, the vehicle model management task, the tester management task, the primary tester management task, etc. of the evaluation subsystem 20 to realize an integrated management of a human-factor intelligent vehicle cabin real-vehicle test project. In the embodiments of the present disclosure, the resource library management task of the evaluation subsystem can be executed by the resource library module 202 to ensure comprehensiveness of management. In the embodiments of the present disclosure, the evaluation design module 203 can invoke the resource library module 202 to add the evaluation task content and set the evaluation method based on the evaluation process designed by the timeline. The evaluation design module 203 can further invoke a subjective evaluation resource and an objective evaluation resource to issue the evaluation task. The evaluation design module 203 can further invoke cases, questionnaires, behavior experiments, and journeys in the resource library as the evaluation task content, and the evaluation task can be issued to a user terminal to perform the test. The use case management subtask in the subjective evaluation task can define and edit evaluation use cases of an intelligent vehicle cabin system. Through visual display, execution history record, and flexible parameter configuration, it can efficiently manage the test process, which can include: (1) test use case library subtask: support adding, editing, and deleting the test use cases; (2) advanced filtering subtask: filter the test use cases based on set rules.

Further, in the embodiments of the present disclosure, the data analysis task of the evaluation subsystem 20 can be executed based on the sensing data and the driver state through the data analysis module 204, which is more reliable. In the embodiments of the present disclosure, the index system of the evaluation subsystem can be constructed through the index system and the weight management module 205, and the corresponding weights of the sensing data and the driver state are obtained based on the index system to perform the task execution by utilizing the weights, thereby filtering indexes to be used and allocating the weights.

In the index system and weight management module 205, the index system is constructed based on composition elements of the human-machine-environment system, and the index system oriented to driver experience can be divided into but not limited to safety, efficiency, and pleasure, which respectively correspond to the two components of the human-machine-environment system in the interaction process and the driver. In addition, the platform supports filtering the indexes to be used and allocating the weights based on the index system.

For example, in an embodiment of the present disclosure, the constructing the index system includes constructing the index system based on composition elements of a human-machine-environment system. The index system includes at least one of a safety index, an efficiency index, and a pleasantness index. An evaluation method for the index in the index system includes subjective evaluation and/or objective evaluation. The subjective evaluation includes a questionnaire scale. The objective evaluation includes at least one of a physiological index, behavior data, and eye movement data. Table 3 is the index system table.

**Table 3**

| Primary index | Secondary index | Tertiary index | Example | Index explanation | Subjective and objective evaluation methods |
|---|---|---|---|---|---|
| Safety | Driving safety | Driving maintenance | 1. Speed maintenance | The ability of the driver to maintain the same or similar speed and lane while performing an interaction task | Objective: behavioral data, driving data |
| | | | 2. Lane keeping | | |
| | | Fixation shift | 1. Shift time | Fixation shift refers to the time and extent when the driver looks away from a road outside the front window in the whole process of operating an interaction function using an interaction manner | Objective: behavioral data, driving data |
| | | | 2. Shift extent | | |
| | | Operational distraction | Operation frequency | Operation distraction is the degree to which the driver's ability to perceive the environment decreases due to the occupation of hand and foot resources caused by operating subtasks. | Objective: behavioral data, driving data |
| | | Cognitive load | 1. Subjective load | Cognitive load is the amount of cognitive resources required by the driver to use the vehicle cabin system, i.e., a measure of attention, working memory, and cognitive processing required to complete the task | Subjective: questionnaire scale Objective: physiological data, eye movement data |
| | | | 2. Pupil diameter | | |
| | | Mental fatigue | 1. Subjective fatigue | Long-term operation or the large amount of information provided by the vehicle cabin system, complex interface design or frequent interface changes may lead to increased driver fatigue | Subjective: questionnaire scale Objective: physiological data, eye movement data |
| | | | 2. Pupil diameter | | |
| | | | 3. Blinking frequency | | |
| Efficiency | Operation performance | Task completion degree | 1. Correct task count | The degree to which a driver uses a human-machine interaction system to perform an interaction task | Objective: behavioral data |
| | | | 2. Task abandonment count | | |
| | | Task completion speed | 1. Time for completing tasks in specific interaction manners | For an interaction task, the shorter the time it takes the driver to perform the task correctly, the faster the speed | Objective: behavioral data |
| | | | 2. Finger movement distance | | |
| | | Task completion accuracy | 1. Spatial distance to target | The fewer unnecessary actions the driver has to try during the interaction task, the higher the task completion accuracy | Objective: behavioral data |
| | | | 2. Number of attempts to complete task | | |
| | | | 3. Ratio of correct operations to total operations | | |
| | | | 4. Number of unnecessary operations | | |
| | Perception performance | Perceptibility | 1. Number of revisions | The degree to which the information in the interaction interface can be perceived by the driver when the driver performs the interaction task, including visual perception, auditory perception, tactile perception, etc. | Subjective: questionnaire scale Objective: physiological index, behavioral data, eye movement data |
| | | | 2. Number of saccades | | |
| | | | 3. Subjective assessment | | |
| | | Comprehensi- | 1. Fixation duration | When the driver | Subjective: |
| | | bility | 2. Operation duration | performs interaction tasks, the information in the interface matches the driver's common knowledge and is easily understood by the driver, including visual elements, voice semantics, etc. | questionnaire scale Objective: physiological Index, behavioral data, eye movement data |
| | | | 3. Subjective assessment | | |
| | | Learnability | 1. Pupil diameter | The extent to which the information in the interface is not too complex and easy to remember when the driver performs interaction tasks | Subjective: questionnaire scale Objective: physiological index, behavioral data, eye movement data |
| | | | 2. Electroencephalogram signals | | |
| | | | 3. Subjective assessment | | |
| Pleasure | Comfort | Credibility | 1. Whether the information provided by the system to the driver is accurate | Driver confidence in control when using system functions/modes | Subjective: questionnaire scale |
| | | | 2. Does the driver think he has full control of the vehicle cabin at all times | | |
| | | Interest degree | 1. Multimode fusion | Degree of fun the driver feels when using system functions/modes | Subjective: questionnaire scale |
| | | | 2. Interaction feedback/voice/charac ter design/dialect; fun UI/lighting/dynamic texture, smooth operation, service novelty | | |
| | | Recognition degree | 1. Product recognition degree | Driver's recognition degree of product/brand | Subjective: questionnaire scale |
| | | | 2. Brand recognition degree | | |
| | | Recommendation degree | 1. Function recommendation degree | Degree of driver's intention to recommend a function/applicatio n/mode of the system to others | Subjective: questionnaire scale |
| | | | 2. Product recommendation degree | | |
| | Satisfaction | Sensory satisfaction | Visual/auditory/tactile /olfactory satisfaction | Driver satisfaction with interfaces and | Subjective: questionnaire |
| | | | | spatial environment in the vehicle cabin on a sensory level | scale Objective: physiological index, behavioral data |
| | | Function satisfaction | Seat, navigation, music, phones, etc. | Driver satisfaction with functional support while performing the interaction task | Subjective: questionnaire scale Objective: physiological index, behavioral data |
| | | Operation satisfaction | Screen interaction, voice interaction, key interaction, gesture interaction | Driver satisfaction with the interaction process when performing the interaction task | Subjective: questionnaire scale objective: physiological index, behavioral data |

The embodiments of the present disclosure can execute the test project management task, the vehicle model management task, the tester management task, and the primary tester management task, etc., thereby realizing the integrated management of the intelligent vehicle cabin real-vehicle test project and improving the management efficiency of the test process. The task execution is performed by utilizing the weights, in turn filtering the index to be used and allocating the weights, which is more reliable.

For example, in an embodiment of the present disclosure, the test project management task includes at least one of the project creation task, the personnel assignment task, the vehicle model association task, and the project progress display task. The vehicle model management task includes at least one of the creation task and the management task of vehicle model information. The tester management task includes at least one of the tester adding task, the tester demographic information adding task, the demographic information user-defined adding task, the tester history recording task, the tester import and export task, and the demographic information statistics task. The primary tester management task includes at least one of the primary tester adding task and the primary tester history recording task.

The test project management task in the embodiments of the present disclosure may include, but is not limited to, followings.
(1) Project create task: support user-defined creating a new local evaluation project, edit a project name and a project storage path; support one-click opening a local storage project and view historical project records.
(2) Personnel assignment task: select the primary tester and the tester of the evaluation project, and invoke personnel information added by a tester management module and a primary tester management module.
(3) Vehicle model association task: select the vehicle model of the evaluation vehicle, invoke the vehicle information added by a vehicle model management module, and then view and compare the evaluation result based on the vehicle model.
(4) Project progress display task: decompose the project into key milestones in the form of a timeline, and use a visualization tool to display a completion progress of the target.

In the embodiments of the present disclosure, the vehicle model management task can create and manage the vehicle model information: add the test vehicle, fill in the vehicle model information, such as fill in the information such as a manufacturer, a vehicle model number, a vehicle identification number (VIN), a vehicle number, a production date, a software version, etc.

According to the embodiments of the present disclosure, the project creation task, the personnel assignment task, the vehicle model association task, and the project progress display task can be created. In this way, the integrated management of the intelligent vehicle cabin real-vehicle test project can be realized based on a complete evaluation project workflow. Through the tester management task, the tester adding task, the tester demographic information adding task, the demographic information user-defined adding task, the tester history recording task, the tester import and export task, the demographic information statistics task, etc., comprehensive information of the tester is maintained to ensure effective participation and management. In addition, information about each primary tester can be completely recorded and managed through the primary tester management task, the primary tester adding task, and the primary tester history recording task to ensure a comprehensive understanding of the primary tester by the system.

For example, in an embodiment of the present disclosure, the resource library management task includes one or more of the use case management subtask, the questionnaire scale management subtask, the behavior experiment management subtask, the journey management subtask, and the voice evaluation management subtask in the subjective evaluation task, and the evaluation tool management subtask and the state evaluation algorithm model management subtask in the objective evaluation task.

In the embodiments of the present disclosure, the questionnaire scale management subtask can manage and maintain a subjective questionnaire and scale to ensure that the system can comprehensively and accurately collect data such as driver experience, including followings.
(1) Scale library subtask: the system has built-in driver experience-related scales, and each scale is equipped with detailed introduction pages, including theoretical background, topic examples, scoring rules, and other contents. Table 4 is a scale.

| Number | Name |
|---|---|
| 1 | System Usability Scale (SUS) |
| 2 | Questionnaire for User Interaction Satisfaction (QUIS) |
| 3 | Usefulness, Satisfaction, and Ease of Use Questionnaire (USE) |
| 4 | Post-Study System Usability Questionnaire (PSSUQ) |
| 5 | Likert Five-Point Satisfaction Scale |
| 6 | Ten-Point Satisfaction and Acceptance Scale (SAE) |
| 7 | After Scenario Questionnaire (ASQ) |
| 8 | NASA Task Load Index (NASA-TLX) |

(2) User-defined scale subtask: support modifying the title and score calculation of scales in the scale library, and support creating new scales through questionnaire scale templates or question-and-answer scale templates.
(3) Search and filter subtask: support searching and filtering based on scale name, type, and other fields.

In an embodiment of the present disclosure, the behavior experiment management subtask can manage and maintain a behavior experiment that can be used for a driving subtask to evaluate cognitive and behavioral responses of the tester under specific conditions, which may include, but are not limited to followings.
(1) Behavior experiment library subtasks: the system has built-in behavior experiments suitable for the driving subtask, such as a GO-NOGO task (dual-task paradigm for studying reaction stopping ability), an Odd-ball task (classic experimental paradigm of Event-related Potentials (ERP)), or the like.
(2) User-defined experiment subtasks: support modifying experiment parameters in the behavior experiment library, and support creating a new experiment through a reaction time paradigm template or an experiment paradigm template.
(3) Search and filter subtasks: support searching and filtering based on fields such as experiment name and type.

In the embodiments of the present disclosure, the journey management subtask may define and create different driver journeys to simulate the complete operation flow of the driver in the intelligent vehicle cabin system, which may include, but is not limited to, followings.
(1) Journey library subtask: the system has built-in driver journeys in multiple different scenarios, the number of which is greater than 10.
(2) User-defined journey subtask: support modifying the journey in the journey library, and support invoking the content of the use case library and the scale library to create a journey.
(3) Search and filter subtasks: support searching and filtering based on fields such as a journey name, a type, and other fields.

In the embodiments of the present disclosure, the voice evaluation management subtask can manage corpus and voice used for the voice interaction evaluation during real-vehicle piggybacking, and may include, but is not limited to, followings.
(1) Corpus subtask: the system has no less than 2000 pieces of corpus covering each functional module of vehicle-machine voice interaction.
(2) Voice library subtask: the system has no less than 20,000 built-in human voice instructions.
(3) Voice interaction evaluation subtask: support for invoking the corpus and voice library content.
(4) Search subtask: support searching the content in the corpus and the voice library.
(5) Import subtask: supports batch import of voice instructions in the voice library.

In the embodiments of the present disclosure, the evaluation tool management subtask in the objective evaluation task can perform an objective quantitative assessment on an operation behavior, a physiological change, an eye movement state, voice interaction or the like of the driver in a process of completing the interaction evaluation task through different types of measurement tools, to manage and count various data indexes, which may include, but are not limited to followings.
(1) Eye movement evaluation tool: provide rich eye movement data such as pupil diameter, blink frequency, fixation time, which is used to evaluate the design and usability of a driver interface of the intelligent vehicle cabin. By measuring the eye movement state of the driver, an attention distribution, a browsing mode, and an interaction path can be understood. In the process of human-machine interaction of the intelligent vehicle cabin, the reaction and performance behavior of the driver interacting with the vehicle cabin can be understood through the eye movement data, which helps improve human-machine interaction interface design.
(2) Physiological evaluation tool: provide heart rate variability (HRV) heart rate, electronic design automation (EDA) electrodermal activity, Respiration (RESP), electromyography (EMG) myoelectric and other physiological characterization change data, which are used to evaluate an emotional state, psychological stress, a fatigue degree, an anxiety level or the like of the driver in the real-vehicle evaluation process, and understand the influence of the intelligent vehicle cabin system on the psychological state of the driver.
(3) Behavior evaluation tool: provide operation performance data such as behavior occurrence times, interaction reaction time, accuracy rate, which are used to evaluate the operation performance in the interaction process such as finger touch. For example, when the driver performs a touch operation on the interaction interface of a central control screen of the intelligent vehicle cabin, a total movement distance of an operating fingertip, direction change frequency of the operating fingertip, operation time, number of operation steps, etc. can be measured and recorded.
(4) Voice evaluation tool: provide objective data of voice interaction and language expression such as speech speed, tone characteristics, noise level, and recognition accuracy, which is used to evaluate voice recognition and voice synthesis performance in the intelligent vehicle cabin, measure perception and emotion regulation effect of the vehicle cabin system on voice emotion of the driver, and evaluate the accuracy and interaction experience quality of the intelligent vehicle cabin system on voice instruction recognition.

In the embodiments of the present disclosure, the state evaluation algorithm model management subtask in the objective evaluation task can support evaluating a psychological state of the tester during evaluation based on multimodal physiological data collected in real-time from the tester and the algorithm model deployed by the system, and may include, but is not limited to, followings.
(1) Load state recognition model: predict at least two classification states of high load level/low load level of the tester in real-time, including but not limited to fusion calculation of heart rate variability (HRV), skin temperature (SKT), electrodermal activity (EDA) or the like of data sources, and belongs to the classic state recognition model of the industry. The model is verified by a scale result or realistic state classification, and the model accuracy is greater than 70%.
(2) Fatigue state recognition model: predict at least two classification states of fatigue/non-fatigue of the tester in real-time, including but not limited to fusion calculation of heart rate variability (HRV), skin temperature (SKT), electrodermal activity (EDA) or the like of data sources, and belongs to the classic state recognition model of the industry. The model is verified by a scale result or realistic state classification, and the model accuracy is greater than 70%.
(3) Emotion recognition model: predict at least three classification states of positive/negative/neutral state of the tester in real-time, including but not limited to fusion calculation of heart rate variability (HRV), skin temperature (SKT), electrodermal activity (EDA) or the like of data sources, and belongs to the classic state recognition model of the industry. The model is verified by a scale result or realistic state classification, and the model accuracy is greater than 70%.

According to the embodiments of the present disclosure, the comprehensiveness of the evaluation can be ensured based on the use case management subtask, the questionnaire scale management subtask, the behavior experiment management subtask, the journey management subtask, the voice evaluation management subtask in the subjective evaluation task, and the evaluation tool management subtask, the state evaluation algorithm model management subtask and the like in the objective evaluation task, and the actual evaluation requirement of the human-factor intelligent vehicle cabin can be met.

For example, in an embodiment of the present disclosure, the data analysis task includes at least one of the video behavior data analysis task, the eye movement data analysis task, the physiological data analysis task, the voice data analysis task, and the visual report task.

It can be understood that the video behavior data analysis task in the embodiments of the present disclosure can support processing and analyzing interaction operation behavior data recorded by the video in the evaluation process. The eye movement data analysis task can support batch processing and visually analyzing the eye movement data in the evaluation process. The physiological data analysis task can support batch processing and visually analyzing the physiological data in the evaluation process. The voice data analysis task can support batch processing and visually analyzing the voice interaction data in the evaluation process. The visual report task can support automatic generating or user-defined preparing the evaluation result report in a text or graphical manner. A visual interaction editing function is provided to adjust report content and export the result report.

In the actual execution process, the video behavior data analysis task in the embodiments of the present disclosure may include, but is not limited to, followings.
(1) Video synchronous playback: support synchronous playback of two-channel and multi-channel videos, user-defined switching of video channels; support a timeline positioning function, video playback fast forward and backward and video player setting function.
(2) Automatic acquisition of task time points: the system can automatically acquire a start time point and an end time point of the test task and a current time of the timeline positioning, and automatically calculate a task duration.
(3) Statistics of cross-screen operation behavior: record the operation data of the driver on the screen, perform user-defined classification based on the characteristics and rules of the operation behavior, including long press, short press, slide, drag, and other operation categories, count the times of each operation behavior, and intuitively present the operation density through the thermal diagram, swarm diagram, trajectory diagram, and other visual manners. Further exploration and analysis of differences between different devices or driver groups.
(4) Feedback and analysis determination record: record the operation feedback of the tester through the questionnaire survey or an oral repetition manner, correlate with the operation data, and combine the video analysis determination result of the primary tester to perform a comprehensive video analysis.

The eye movement data analysis task in the embodiments of the present disclosure may include followings.
(1) Eye movement data processing: extract a fixation point, a blink, and a saccade state based on an I-VT algorithm; support user-defined setting processing parameters, including a noise reduction level, data interpolation, fixation point time difference, fixation point angle difference, and other criteria.
(2) Visualized eye movement data Chart: include original data, fixation point X and Y coordinates and angular velocity of the processed data, and pupil data of the left and right eyes.
(3) Eye movement fixation mapping: support local Gaze Mapping automatic superposition and manual coding function; provide an Assisted Mapping confidence interval visualization result presentation, and support an multitask data automatic processing.
(4) Eye movement visualization analysis: provide a hot spot map, a fixation trajectory map, a fixation trajectory playback video, and other visualization results presentation and export.
(5) Area of Interest (AOI) analysis: support user-defined sequence settings based on a single AOI or an AOI Group, support statistical analysis of the eye movement data in a created Snapshot AOI and a created Dynamic AOI.
(6) Time of Interest (TOI) event sequence analysis: user-defined Metrics, Interval onset and offset of the visual result, and data such as sequence length, TTF, access times, behavior count, TOI proportion based on events in Excel format files.
(7) Eye movement data export: support exporting all original data, processed data, and analysis data in Excel, CSV, TSV, XLSX, and PLOF formats, including a gyroscope, an acceleration sensor, a magnetometer and pupil data, as well as statistical index of fixation, visit, and saccade based on the AOI; provide visualization results presentation and export such as the hots pot map, the fixation trajectory map, the fixation trajectory playback video, etc.; support creating and editing the Snapshot AOI and the Dynamic AOI, and support AOI Tag grouping to obtain the statistical index based on the AOI or the AOI Group; support a local Assisted Mapping automatic superposition function and a manual Coding function, provide the Assisted Mapping confidence interval visualization result presentation and support the multitask data automatic processing; provide the TOI event sequence analysis function, the user-defined Metrics, the Interval onset and offset of the visualization result, the data such as sequence length, TTF, access times, behavior count, TOI proportion based on events may be exported in Excel format files; support exporting the gyroscope, acceleration sensor, magnetometer, and pupil data; preset Attention and Fixation visualization data filtering standards, support creating user-defined data filtering standards, including standards such as the noise reduction level, the data interpolation, the fixation point time difference, and the fixation point angle difference; support an I-VT data filter, support visual angular velocity visualization result presentation; support statistical index of fixation, visit, and saccade based on the AOI; an exported original data is in the format of TSV, XLSX, PLOF.

The physiological data analysis task in the embodiments of the present disclosure may include, but is not limited to, followings.
(1) Physiological data processing: support batch processing of an HRV signal, a EDA signal, an RESP signal, a EMG signal, etc., user-defined configure processing parameters in advance or use system default parameters for batch processing of multi-tester data, and obtain the most reliable physiological data through filtering and other parameters.
(2) HRV data analysis: support an IBI point detection, an HRV time domain analysis, a frequency domain analysis, a difference scatter plot analysis, etc. to quantitatively evaluate sympathetic and parasympathetic nerve activity.
(3) EDA data analysis: support automatic recognition of a skin conductance response (SCR), a ER event related analysis, a time domain analysis, a ER overall statistics, and a visual chart display.
(4) RESP data analysis: support a RESP signal time domain analysis and the frequency domain analysis.
(5) EMG data analysis: support signal normalization, a EMG processing data analysis, a rectification data analysis, a normalized data analysis, a frequency domain analysis, and a dynamic periodic force recognition.
(6) Visual Chart and data export: support exporting original data, processed data, analysis data, an overall data report, down-sampled data, relative time data, absolute time data, etc. in Excel and CSV formats.

The voice data analysis task in the embodiments of the present disclosure may include, but is not limited to, followings.
(1) Voice data processing: support cleaning the voice data and extracting a voice feature by using the filter.
(2) Visual analysis of the voice data: extracting audio information from the video, visually displaying an audio track, and quickly determining, based on vision, whether there is voice activity in a certain period.
(3) Voice segment sequence analysis: marking speech paragraphs and corpus sequences by voice activity detection, and performing a voice group segment analysis based on sequences.
(4) Voice interaction analysis: analyzing and counting the voice interaction data in the evaluation process, including a voice interaction accuracy rate, reaction time, voice interaction times, or the like.
(5) Voice data export: support exporting the original data, the processed data, the analyzed data, and the overall data report of the voice.

The visual report task in the embodiments of the present disclosure may include followings.
(1) Questionnaire scale report: provide scores of different dimensions of the scale and specific options of the tester.
(2) Behavior experiment report: provide the overall result statistics of the experiment and detailed results of each trial.
(3) Physiological data report: provide comprehensive statistical results and visual charts based on events or segments and different analysis methods for each physiological index.
(4) Eye movement data report: provide comprehensive statistical results and visual charts based on different records, segment types, and different analysis methods for each eye movement index.
(5) Behavior data report: provide comprehensive statistical results and visual charts based on different records, fragment types, behavior types, and different analysis methods for each behavior index.

According to the embodiments of the present disclosure, the data collection rate can be improved through the video behavior data analysis task, the eye movement data analysis task, the physiological data analysis task, the voice data analysis task, the visual report task, and the like, to ensure the reliability of the analysis, and finally the efficiency and accuracy of the evaluation are effectively improved.

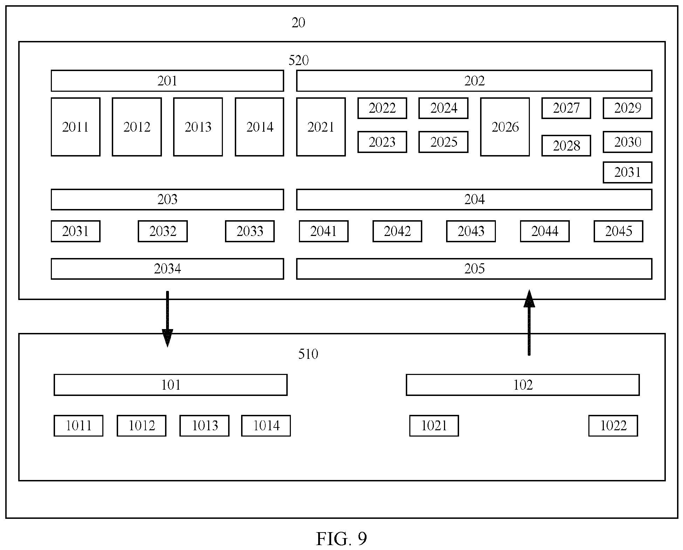

In an exemplary embodiment of the present disclosure, the working principle of the evaluation subsystem in the embodiments of the present disclosure can be described in detail with reference to FIG. 9 by using a specific embodiment.

As shown in FIG. 9, the embodiments of the present disclosure include at least one single-vehicle evaluation system 510 and the evaluation management system 520.

The at least one single-vehicle assessment system 510 includes the collection component 101, an eye movement data collection unit 1011, a physiological data collection unit 1012, a behavior data collection unit 1013, a voice data collection unit 1014, the assessment component 102, a fatigue level assessment unit 1021, and an emotional state assessment unit 1022.

The evaluation management system 520 includes a system management module 201, a project management unit 2011, a vehicle model management unit 2012, a tester management unit 2013, and a primary tester management unit 2014; the resource library module 202, a subjective evaluation unit 2021, a questionnaire survey unit 2022, a behavior test unit 2023, a use case management unit 2024, a journey unit 2025, an objective evaluation unit 2026, an eye movement evaluation unit 2027, a physiological evaluation unit 2028, a behavior evaluation unit 2029, a voice evaluation unit 2030, an intelligent evaluation unit 2031; the evaluation design module 203, a timeline establishment unit 2031, a resource library invoke unit 2032, a subjective and objective evaluation unit 2033, a test content publishing unit 2034; the data analysis module 204, a video behavior data analysis unit 2041, an eye movement data analysis unit 2042, a physiological data analysis unit 2043, a voice data analysis unit 2044, and a visual report export unit 2045; the index system and the weight management module 205.

According to the evaluation subsystem of the embodiments of the present disclosure, the driver experience test can be performed by using the generated evaluation content, and the experience evaluation data of the human-factor intelligent vehicle cabin can be obtained based on the sensing data of the driver and driver state feedback, to provide the comprehensive and accurate evaluation system specification for the driver experience assessment, which can meet the actual evaluation requirement of the human-factor intelligent vehicle cabin, and effectively improve the efficiency and accuracy of the evaluation. Therefore, problems that, when the driver experience test is performed on the vehicle cabin of the vehicle, the driver experience in the evaluation process is affected due to the objective evaluation basis of the driver experience is lacking and the actual evaluation requirement of the vehicle cabin cannot be met, and the efficiency and accuracy of the evaluation are poor are solved.

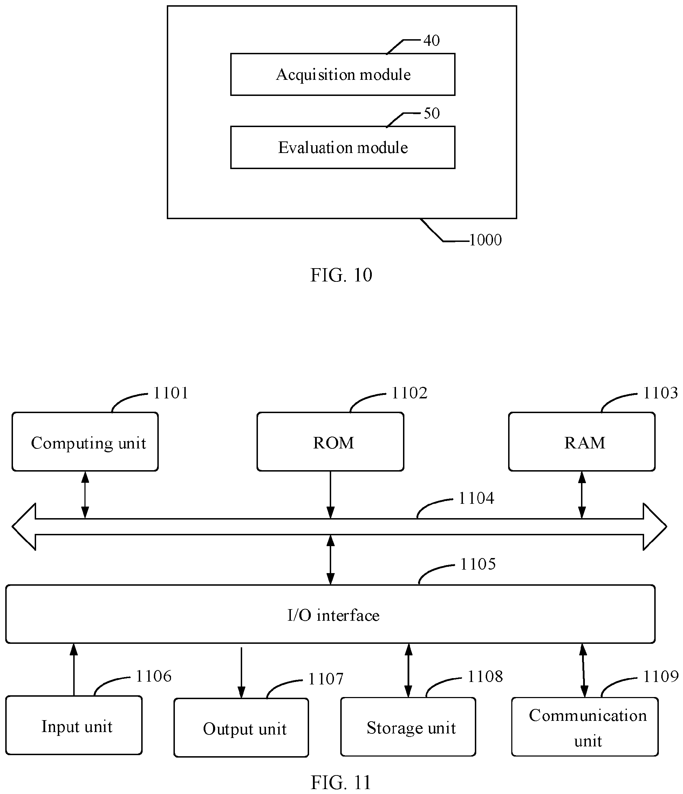

The present disclosure further provides a human-machine interaction evaluation device of a vehicle. As shown in FIG. 10, a human-machine interaction evaluation device 1000 of a vehicle includes an acquisition module 40 and an evaluation module 50. The acquisition module 40 is configured to acquire, in a target driving test scenario, human-factor interaction data and external data. The human-factor interaction data is generated based on an interaction between a tester and a human-machine interaction system of the vehicle, and the external data is associated with driving of the vehicle. The evaluation module 50 is configured to evaluate an interaction element in the human-machine interaction system based on the human-factor interaction data and the external data to obtain evaluation data for the interaction element. The evaluation data is used to indicate the interaction compatibility between the tester and the interaction element.

FIG. 11 is a block diagram of an edge computing device according to an embodiment of the present disclosure. The embodiments of the present disclosure provide the edge computing device including a memory and a processor. The memory is configured to store a computer program, and the processor, when executing the computer program, performs the method for evaluating the human-machine interaction of the vehicle.

As shown in FIG. 11, for ease of understanding, the embodiments of the present disclosure show a specific edge computing device 1100. The edge computing device 1100 is intended to represent various forms of digital computers, such as laptop computers, desktop computers, workstations, personal digital assistants, servers, blade servers, mainframe computers, and other suitable computers. The edge computing device may further represent various forms of mobile devices, such as personal digital processing, cellular phones, eye trackers, Augmented Reality (AR)/Virtual Reality (VR)/Extended Reality (XR)/Mixed Reality (MR) devices, smartphones, wearable devices, and other similar computing devices. The components illustrated herein, their connections and relationships, and their functions are by way of example only, and are not intended to limit implementations of the disclosure described and/or claimed herein. In an optional example, an edge deployment scheme in which the human-machine interaction evaluation device of the vehicle is deployed as the edge computing device or component on an end-side can migrate at least part of the computing tasks to an end-side device, thereby leveraging the advantages of the edge computing to improve data processing efficiency, reducing latency and network resource occupation and dependence, and facilitating data security and privacy protection.

As shown in FIG. 11, the device 1100 includes a computing unit 1101 that can perform various appropriate actions and processes in accordance with a computer program stored in a read only memory (ROM) 1102 or loaded from a storage unit 1108 into a random access memory (RAM) 1103. In the RAM 1103, various programs and data necessary for the operation of the edge computing device1100 may also be stored. The computing unit 1101, the ROM 1102, and the RAM 1103 are connected to each other through a bus 1104. An input/output (I/O) interface 1105 is also connected to the bus 1104.

A plurality of components in the edge computing device1100 is connected to the I/O interface 1105. The components include an input unit 1106, such as a keyboard, a mouse; an output unit 1107, such as various types of displays, speakers; a storage unit 1108, such as a magnetic disk, an optical disk; and a communication unit 1109, such as a network card, a modem, a wireless communication transceiver. The communication unit 1109 is configured to allow the edge computing device 1100 to exchange information/data with other devices through a computer network such as the Internet and/or various telecommunication networks.

The computing unit 1101 may be a variety of general purpose and/or special purpose processing components having processing and computing capabilities. Some examples of the computing unit 1101 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The calculation unit 1101 is configured to perform the various methods described above, such as the method for evaluating the human-machine interaction of the vehicle. For example, in some embodiments, the method for evaluating the human-machine interaction of the vehicle may be implemented as a computer software program tangibly embodied on a machine-readable medium, such as the storage unit 1108. In some embodiments, part or all of the computer program may be loaded and/or installed on the edge computing device 1100 via the ROM 1102 and/or the communication unit 1109. When the computer program is loaded into the RAM 1103 and executed by the computing unit 1101, the method for evaluating the human-machine interaction of the vehicle described above may be performed. Alternatively, in other embodiments, the computing unit 1101 may be configured to perform the method for evaluating the human-machine interaction of the vehicle in any other suitable manner (e.g., utilizing firmware).

It should be noted that the logic and/or step described in other manners herein or shown in the flow chart, for example, a particular sequence table of executable instructions for realizing the logical function, may be specifically implemented in any computer readable medium to be used by the instruction execution system, device or equipment (such as the system based on computers, the system including processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples (non-exhaustive list) of the computer readable medium include but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples.

In the description of the present disclosure, it should be understood that the orientation or position relationship indicated by the terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" should be construed to refer to the orientation or the position as shown in the drawings, and is only for the convenience of describing the present disclosure and simplifying the description, rather than indicating or implying that the pointed apparatus or element must have a specific orientation, or be constructed and operated in a specific orientation, and therefore cannot be understood as a limitation of the present disclosure.

In addition, terms such as "first" and "second" used in the embodiments of the present disclosure are only used for descriptive purposes, and may not be understood as indicating or implying relative importance, or implicitly indicating the number of technical features indicated in the embodiments. Therefore, the features defined by terms such as "first" and "second" in the embodiments of the present disclosure may explicitly or implicitly indicate that the embodiments include at least one of the features. In the description of this application, the word "plurality" means at least two, e.g., two, three, four, etc., unless otherwise specifically limited in the embodiment.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Although embodiments of the present disclosure have been shown and described above, it should be understood that the above embodiments are merely exemplary, and cannot be construed as limitations of the present disclosure. For those skilled in the art, changes, modifications, replacements and alternatives can be made to the above embodiments without departing from the scope of the present disclosure.

## Claims

1. A method for evaluating a human-machine interaction of a vehicle, the method comprising:
acquiring, in a target driving test scenario, human-factor interaction data and external data, wherein the human-factor interaction data is generated based on an interaction between a tester and a human-machine interaction system of the vehicle, and the external data is associated with driving of the vehicle; and
evaluating an interaction element in the human-machine interaction system based on the human-factor interaction data and the external data to obtain evaluation data for the interaction element.

2. The method according to claim 1, wherein said evaluating the interaction element in the human-machine interaction system based on the human-factor interaction data and the external data comprises:
processing the human-factor interaction data and the external data to obtain processed data and a preliminary evaluation result; and
processing the processed data and the preliminary evaluation result based on evaluation rule data to obtain the evaluation data for the interaction element.

3. The method according to claim 2, wherein said processing the human-factor interaction data and the external data to obtain the processed data and the preliminary evaluation result comprises:
preprocessing the human-factor interaction data and the external data to obtain a preprocessing result as the processed data, wherein the preprocessing result comprises at least one of labeling the human-factor interaction data and the external data, dividing data segments of the human-factor interaction data and the external data, determining information about the human-machine interaction system in which the tester is interested, and performing smoothing process on the human-factor interaction data and the external data; and
obtaining the preliminary evaluation result based on the preprocessing result, wherein the preliminary evaluation result comprises at least one of association information between the human-factor interaction data and the external data, and evaluation information for the interaction element.

4. The method according to claim 2 or 3, wherein:
the evaluation data comprises an evaluation score, and the evaluation rule data comprises an evaluation index and a score corresponding to the evaluation index; and
said processing the processed data and the preliminary evaluation result based on the evaluation rule data to obtain the evaluation data for the interaction element comprises:
processing the processed data and the preliminary evaluation result to obtain an index value corresponding to the evaluation index; and
obtaining the evaluation score for the interaction element based on the index value and the score corresponding to the evaluation index.

5. The method according to any one of claims 1 to 4, wherein said evaluating the interaction element in the human-machine interaction system based on the human-factor interaction data and the external data comprises: acquiring subjective evaluation data for the interaction element in the human-machine interaction system; and evaluating the interaction element in the human-machine interaction system based on the human-factor interaction data, the external data, and the subjective evaluation data; and/or,
the method further comprises:
assessing the evaluation rule data, wherein the evaluation rule data comprises at least one of basic evaluation data, experience evaluation data, and user-defined evaluation data.

6. The method according to claim 5, wherein said assessing the evaluation rule data comprises:
assessing, in another driving test scenario different from the target driving test scenario, the interaction element in the human-machine interaction system based on the evaluation rule data to obtain an objective assessment result;
obtaining, in the another driving test scenario, a subjective assessment result for the interaction element in the human-machine interaction system; and
obtaining an assessment result for the evaluation rule data based on the objective assessment result and the subjective assessment result.

7. The method according to any one of claims 1 to 6, further comprising:
selecting the target driving test scenario from a candidate driving test scenario;
acquiring driving environment information of the target driving test scenario based on a data acquisition manner corresponding to the target driving test scenario; and
displaying the driving environment information in the human-machine interaction system, to enable the tester to control the vehicle to drive through interacting with the human-machine interaction system based on the driving environment information.

8. The method according to claim 7, further comprising:
acquiring updated driving environment information subsequent to the tester controlling the vehicle to drive through interacting with the human-machine interaction system based on the driving environment information; and
displaying the updated driving environment information in the human-machine interaction system,
wherein the candidate driving test scenario comprises at least one of:
a virtual driving test scenario, wherein a data acquisition manner corresponding to the virtual driving test scenario comprises at least one of a manner of generating data based on a virtual software and a manner of collecting data through a virtual sensor;
a virtual-real combination driving test scenario, wherein a data acquisition manner corresponding to the virtual-real combination driving test scenario comprises at least one of the manner of generating data based on the virtual software, the manner of collecting data through the virtual sensor, a manner of collecting data through a real sensor, and a manner of receiving data from an external device; and
a real driving test scenario, wherein a data acquisition manner corresponding to the real driving test scenario comprises at least one of the manner of collecting data through the real sensor and the manner of receiving data from the external device.

9. The method according to any one of claims 1 to 8, further comprising:
receiving editing data for the human-machine interaction system, wherein the editing data is used to edit at least one of a display content, an interaction manner, and a display form of the interaction element; and
generating the human-machine interaction system based on the editing data and displaying the human-machine interaction system, to enable the tester to interact with the human-machine interaction system,
wherein:
the human-machine interaction system comprises at least one of a vehicle Head Up Display system, an instrument panel, an instrument, a central control screen, a co-driver interaction device, and an entertainment screen;
the human-factor interaction data comprises at least one of physiological data of the tester, eye movement data of the tester, electroencephalogram data of the tester, hand operation track data of the tester, motion posture data of the tester, face data of the tester, and voice data of the tester; and
the external data associated with the driving of the vehicle comprises at least one of driving data of the vehicle, external traffic data, external environment data, and voice data of the human-machine interaction system.

10. The method according to any one of claims 1 to 9, wherein:
the tester comprises an evaluation driver; and
the method further comprises:
collecting a plurality of pieces of human-factor interaction data of at least one evaluation driver of the vehicle based on a corresponding evaluation content and a driver state of the at least one evaluation driver identified based on the plurality of pieces of human-factor interaction data, wherein the driver state comprises a fatigue level and/or an emotional state of the evaluation driver; and
obtaining experience evaluation data of a vehicle cabin based on the plurality of pieces of human-factor interaction data and the driver state, wherein the experience evaluation data is used to assess interactivity between the vehicle cabin and the evaluation driver.

11. The method according to claim 10, further comprising:
synchronizing the plurality of pieces of human interaction data collected for a same evaluation driver; wherein
said obtaining the experience evaluation data of the vehicle cabin based on the plurality of pieces of human-factor interaction data and the driver state comprises obtaining the experience evaluation data of the vehicle cabin based on the plurality of pieces of synchronized human-factor interaction data and the driver state.

12. The method according to claim 10 or 11, wherein said collecting the plurality of pieces of human-factor interaction data of the at least one evaluation driver of the vehicle based on the corresponding evaluation content and the driver state of the at least one evaluation driver identified based on the plurality of pieces of human-factor interaction data comprises:
executing at least one of a test project management task, a vehicle model management task, a tester management task, and a primary tester management task;
executing a resource library management task;
generating an evaluation process and the corresponding evaluation content based on a timeline;
executing a data analysis task based on the plurality of pieces of human-factor interaction data and the driver state; and
constructing an index system, obtaining corresponding weights of the plurality of pieces of human-factor interaction data and the driver state based on the index system, and performing task execution by utilizing the weights.

13. An evaluation system, comprising:
a deployment subsystem configured to edit a human-machine interaction system, generate the human-machine interaction system, display the human-machine interaction system, select a target driving test scenario, acquire driving environment information of the target driving test scenario, and display the driving environment information on the human-machine interaction system;
an evaluation subsystem configured to perform the method according to any one of claims 1 to 12; and
a data communication module configured to send the human-factor interaction data and the external data from the deployment subsystem to the evaluation subsystem.

14. An edge computing device, comprising:
a memory configured to store a computer program; and
a processor, wherein the processor, when executing the computer program, performs the method according to any one of claims 1 to 12.

15. A computer-readable storage medium having a computer program stored thereon, wherein a processor, when executing the computer program, performs the method according to any one of claims 1 to 12.
